# EUROPEAN PATENT APPLICATION

(11) **EP 2 202 065 A1**
(43) Date of publication of application: **30.06.2010**
(21) Application number: 08832304.3
(22) Date of filing: 18.09.2008
(51) Int. Cl.: B32B 33/00, C08J 7/04

(54) **ANTIFOG COVER AND METER COVER USING THE ANTIFOG COVER**

(30) Priority: 20.09.2007 JP 2007244113
(71) Applicant: Fujifilm Corporation, Tokyo 106-0031 (JP)
(72) Inventor: MURAYAMA, Yuichiro, Odawara-shi, Kanagawa (JP); KONDO, Yoshiaki, Odawara-shi, Kanagawa (JP)
(74) Representative: HOFFMANN EITLE
(86) International application number: PCT/JP2008/066889
(87) International publication number: WO 2009/038150

(57) **Abstract**

An antifogging cover having high hydrophilicity and excellent durability in hot and humid surroundings, especially for meter use, is provided.

The antifogging cover is an antifogging cover having a coating layer of hydrophilic composition on at least one side of a substrate, **characterized in that** the coating layer surface has a water contact angle of 15° or below not only before but also after it is subjected to 500-hour immersion in 30°C water, and moreover its center-line average roughness Ra is from 1.0 nm to 5.0 nm.

## Description

### Technical Field

The present invention relates to an antifogging cover that is especially useful as a meter cover.

### Background Art

Automobiles, motorcycles, agricultural machines, heavy construction machines, ships, factory equipment or facilities for gas, water, electric power or like utilities are equipped with various kinds of meters, and covers made from transparent or translucent glass or resin are generally attached to those meters for purposes of display-area protection and so on. However, visibility of a meter's display is reduced because a meter cover is often fogged by deposition of moisture through changes in temperature and humidity conditions, or its transparency is lowered by dirt. So, visual identification on the display becomes difficult in some cases. Moreover, meters exposed to the outdoors, such as those installed in agricultural machines, heavy construction machines, factory equipment or utility facilities, are in harsh environments that they are exposed to not only sunlight, wind and rain but also dust, and when it begins to rain from a state of humidity saturation prior to rainfall and the panel surface of the meter cover is cooled by the rain, not only water droplets are produced inside the panel and cause considerable reduction in visibility of the meter, but also these water droplets leave a deposit of their residue on the inner surface of the panel after they disappear by evaporation. And this residue increases its deposition amount with the lapse of time, thereby degrading the visibility and also becoming a cause of impairment of the appearance.

Therefore, it has so far been proposed to give antifogging treatment to meter covers for the purpose of reducing the fogging attributed to changes in temperature and humidity conditions. Many of the hitherto proposed methods for giving antifogging treatment to meter covers consist in surface coating with synthetic resin-based antifogging agents. However, synthetic resin-based antifogging agents are not enough in chemical and thermal stabilities, so there may be cases where such meter covers deteriorate with time or restrictions are put on the temperature condition for their use. In addition, it cannot be said that the duration of their antifogging effect is sufficiently long, and moreover they in themselves make stains and become a cause of lowering the visibility of meters. Accordingly, it cannot be said that those synthetic resin-based antifogging agents are totally suitable as agents for antifogging treatment of meters, particularly for the foregoing meters which are installed in a state of being exposed to the outdoors.

Recent years have also seen development of meter covers which are coated with films containing photocatalysts, typified by titanium oxide, instead of being treated with the foregoing synthetic resin-based antifogging agents. On being irradiated with light (ultraviolet radiation), such a photocatalyst produces positive holes or conduction electrons through the excitation of electrons in its valence band, and thereby polarity is imparted to the film surface, and the film surface is rendered hydrophilic. And by this action of a photocatalyst, such a high hydrophilic property that an angle of contact with water is 10° or below is imparted to the meter cover, and thereby adhesion of water droplets to the meter cover is prevented with extreme effectiveness. In addition, the meter cover coated with photocatalyst-containing film has an advantage in its capability to keep the once-taken hydrophilic property in good condition for a long time in faint lighting like indoor lighting, much more in the dark. For details of such photocatalyst-containing film Patent Gazettes including JP-A-9-57912, JP-A-9-59041, JP-A-9-59042, JP-A-9-227160, JP-A-9-224793 and so on can be referred to.

For example, Patent Document 1 discloses the antifogging agent characterized by containing as main ingredients polyvinyl alcohol, methyl vinyl ether-maleic anhydride copolymer and water.
Patent Document 2 discloses the antifogging agent characterized by including a hydroxyl-containing organic substance and a metallo-organic compound and subjecting them to polycondensation through heat treatment.
Patent Document 3 discloses the antifogging and antifouling meter cover characterized by forming on a resin substrate the photocatalyst film in which fine powder of crystallized titanium oxide is bound with a binder including amorphous titanium oxide.
Patent Document 4 discloses the hydrophilic composition containing a specified hydrophilic polymer and an alkoxide compound of an element chosen between Si, Ti, Zr and Al.
However, the arts disclosed by Patent Documents 1 and 2, though they are antifogging agents using polyvinyl alcohol, cannot ensure sufficient hydrophilicity, and besides, the persistence of their hydrophilicity is not satisfying because the polymer is eluted by dew condensation water.
The art of Patent Document 3 cannot achieve sufficient effect in the nighttime when the meter cover gets little light (ultraviolet radiation). In addition, it has a drawback that, when a vehicle is parked in the nighttime and the meter cover thereof is exposed to night damp air, condensation occurs on the meter cover early in the morning and lowers the visibility.
In order to overcome the foregoing problems, attention was given to properties of sol-gel, organic-inorganic hybrid film, and it has been found that the hydrophilic surface having a cross-linked structure formed through hydrolysis and polycondensation reaction between a hydrophilic polymer and an alkoxide exhibited excellent antifogging and antifouling properties, and besides, it had satisfactory abrasion resistance (Patent Document 4). However, further improvements in durability under hot and humid environmental conditions are required.
Patent Document 1: JP-A-9-235544
Patent Document 2: JP-A-10-212471
Patent Document 3: JP-A-11-189109
Patent Document 4: JP-A-2007-138105

### Disclosure of the Invention

### Problems that the Invention is to Solve

The invention aims to provide an antifogging cover that has not only a highly hydrophilic property but also excellent durability under hot and humid environmental conditions, and by extension an antifogging cover designed specifically for meter use.

### Means for Solving the Problems

The problems as mentioned above are solved by the following aspects:
1. An antifogging cover having a coating layer of hydrophilic composition on at least one side of a substrate, wherein the surface of the coating layer has a water contact angle of 15° or below not only before but also after the coating layer is subjected to 500-hour immersion in 30°C water, and a center-line average roughness Ra from 1.0 nm to 5.0 nm.
2. The antifogging cover as described in the aspect 1, wherein the water contact angle is 10° or below not only before but also after the coating layer is subjected to 500-hour immersion in 30°C water.
3. The antifogging cover as described in the aspect 1 or 2, wherein the substrate is formed from any of glass, acrylic resin and polycarbonate resin.
4. The antifogging cover as described in any of the aspects 1 to 3, wherein a refractive index difference between the coating layer and the substrate is from 0.5% to 30.0% of the refractive index of the coating layer.
5. The antifogging cover as described in any of the aspects 1 to 4, wherein the hydrophilic composition contains a polymer having an alkoxysilyl group in its molecule.
6. The antifogging cover as described in the aspect 5, wherein the polymer having an alkoxysilyl group in its molecule has a structure represented by the following formula (II).

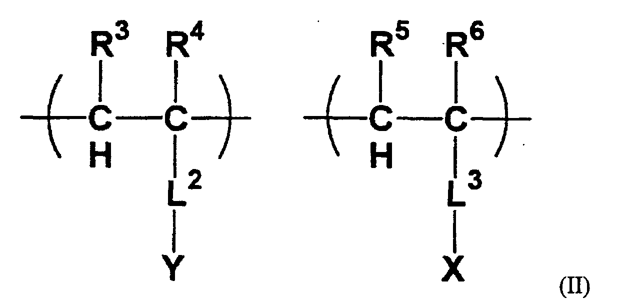

In the formula (II), each of R³, R⁴, R⁵ and R⁶ independently represents a hydrogen atom or a hydrocarbon group; X represents a group represented by the following formula (a); each of L² and L³ independently represents a single bond or a linkage group; and Y represents NHCOR, -NHCO₂R, -NHCONR₂, -CONH₂, -NR₂, -CONR₂, -OCONR₂, -COR, -OH, -OR, -CO₂M, -CO₂R, -SO₃M, -OSO₃M, -SO₂R, -NHSO₂R, -SO₂NR₂, -PO₃M, -OPO₃M, -(CH₂CH₂O)ₙH, -(CH₂CH₂O)ₙCH₃ or NR₃Z¹, wherein R represents a hydrogen atom, an alkyl group, an aryl group or an aralkyl group, and when plural Rs are present, each R may be the same as or different from every other R, M represents a hydrogen atom, an alkyl group, an alkali metal, an alkaline earth metal or an onium, n represents an integer, and Z¹ represents a halogen ion.

Formula (a): -Si(R¹⁰²)ₐ(OR¹⁰¹)₃₋ₐ

In the formula (a), R¹⁰¹ represents a hydrogen atom or an alkyl group, R¹⁰² represents a hydrogen atom or a univalent hydrocarbon group selected from alkyl groups, aryl groups or aralkyl groups, and a represents an integer of 0 to 2. When plural R¹⁰¹s or plural R¹⁰²s are present, each R¹⁰¹ or R¹⁰² may be the same as or different from every other R¹⁰¹ or R¹⁰², respectively.
7. The antifogging cover as described in any of the aspects 1 to 6, wherein the hydrophilic composition contains an alkoxide compound of any element selected from Si, Ti, Zr and Al.
8. The antifogging cover as described in any of the aspects 1 to 7, wherein the surface of the coating layer has a water contact angle of 5° to 15° not only before but also after the coating layer is subjected to 500-hour immersion in 30°C water.
9. A meter cover, in which the antifogging cover as described in any of the aspects 1 to 8 is used for covering a meter.

### Advantage of the Invention

The antifogging cover according to the invention has a water contact angle of 15° or below on its surface not only before but also after it is subjected to 500-hour immersion in 30°C water, and its hydrophilicity is higher than ever before. Therefore, in the case of using the antifogging cover as a meter cover, even when water into which water vapor is condensed by changes in temperature and humidity conditions adheres to the cover in the form of droplets, the water droplets wet and spread over the cover surface in an instant. So, no fogging occurs, and excellent visibility is obtained. Further, the antifogging cover can exhibit hydrophilicity even when it has less thickness than those currently in use, so it also has an effect of not spoiling the transparency of a substrate itself. In addition, the present antifogging cover has a water contact angle of 15° or below on its surface even after immersion in water for a long period of time, so it can retain high hydrophilicity for a long period of time, and it has excellent durability too.

### Best Mode for Carrying Out the Invention

The invention is described below in detail.
The present antifogging cover is formed by coating at least one side of a substrate with a hydrophilic composition.
The hydrophilic composition is preferably a composition to form a hydrophilic coating (also referred to as a hydrophilic film, hydrophilic layer or hydrophile layer) that has both hydrophilic polymer chains and a cross-linked structure formed by hydrolyzing and polycondensing an alkoxide of any element chosen between Si, Ti, Zr and Al (also referred to as a metal alkoxide). The hydrophilic layer having such a cross-linked structure can be formed as appropriate by using a metal alkoxide compound as described hereinafter, a compound having a hydrophilic functional group capable of forming a hydrophilic graft chain and a suitable catalyst. Of metal alkoxides, Si alkoxides are preferable to the others because of their reactivity and availability, and more specifically, compounds for silane coupling agents can be used to advantage.

In the invention, the cross-linked structure formed by hydrolysis and polycondensation of the metal alkoxide as specified above is hereafter referred to as a sol-gel cross-linked structure where appropriate. Each of ingredients contained in the hydrophilic coating liquid composition for forming a hydrophilic layer as this preferred embodiment is illustrated below.

### [Hydrophilic Polymer]

The hydrophilic polymer has no particular restriction as to its main-chain structure. Examples of a preferred main-chain structure include those of acrylic resin, methacrylic resin, polyvinyl acetal resin, polyurethane resin, polyurea resin, polyimide resin, polyamide resin, epoxy resin, polystyrene resin, novolac-type phenol resin, polyester resin, synthetic rubber, natural rubber and so on, notably those of acrylic resin and methacrylic resin. The hydrophilic polymer may be a copolymer.

Suitable examples of a hydrophilic group include functional groups such as a carboxyl group, an alkali metal salt of carboxyl group, a sulfonic acid group, an alkali metal salt of sulfonic acid group, a hydroxyl group, an amido group, a carbamoyl group, a sulfonamide group and a sulfamoyl group. These groups may be present at any sites in a polymer. These groups may be attached to the main chain of a polymer directly or via linkage groups, or they may form bonds in polymer side chains or graft side chains, and a polymer structure that two or more of those groups are present is preferred.

The hydrophilic polymer used in the invention is preferably a polymer having a group capable of forming a bond with a metal alkoxide under the action of a catalyst or the like. Examples of a group capable of forming a bond with a metal alkoxide compound under the action of a catalyst include reactive groups such as an alkoxysilyl group, a carboxyl group, an alkali metal salt of carboxyl group, a carboxylic anhydride group, an amino group, a hydroxyl group, an epoxy group, a methylol group, a mercapto group, an isocyanate group, a blocked isocyanate group, an alkoxytitanate group, an alkoxyalminate group, an alkoxyzirconate group, an ethylenic unsaturated group, an ester group and a tetrazole group.

Suitable examples of a polymer structure having a hydrophilic group and a group capable of forming a bond with a metal alkoxide under the action of a catalyst or so on include structures of polymers produced by vinyl polymerization of ethylenic unsaturated groups (such as an acrylate group, a methacrylate group, an itaconic acid group, a crotonic acid group, a succinic acid group, a styryl group, a vinyl group, an allyl group, a vinyl ether group and a vinyl ester group), those of polymers produced by polycondensation, such as polyester, polyamide and polyamic acid, those of polymers produced by addition polymerization, such as polyurethane, and structures of naturally-occurring cyclic polymers, such as cellulose, amylose and chitosan. The preferred are polymers having hydrolyzable silyl groups, notably alkoxysilyl groups, in their respective molecules.

The hydrolyzable silyl group such as an alkoxysilyl group is a group capable of producing silanol (Si-OH) by reaction with water, preferably a group represented by the following formula (a):

Formula (a): -Si(R¹⁰²)ₐ(OR¹⁰¹)₃₋ₐ

In the formula (a), R¹⁰¹ represents a hydrogen atom or an alkyl group, R¹⁰² represents a hydrogen atom or a univalent hydrocarbon group chosen from alkyl groups, aryl groups or aralkyl groups, and a represents an integer of 0 to 2. When two or more R¹⁰¹s or two or more R¹⁰²s are present, each R¹⁰¹ or each R¹⁰² may be the same as or different from every other R¹⁰¹ or every other R¹⁰², respectively.

The alkyl group represented by R¹⁰¹ is preferably an alkyl group having 1 to 10 carbon atoms, specifically a methyl group, an ethyl group (or equivalently, a methoxy group, an ethoxy group in the form of OR¹⁰¹) or the like. The alkyl group represented by R¹⁰² is preferably an alkyl group having 1 to 10 carbon atoms, specifically a methyl group, an ethyl group, a hexyl group or the like, the aryl group represented by R¹⁰² is preferably an aryl group having 6 to 25 carbon atoms, specifically a phenyl group or the like, and the aralkyl group represented by R¹⁰² is preferably an aralkyl group having 7 to 12 carbon atoms, specifically a styryl group or the like.

The alkoxysilyl group is preferably an alkoxysilyl group bonded to a carbon atom. There are cases where one or more than one alkoxysilyl group is present e.g. at the main-chain end of a polymer or in a polymer's side chain. When two or more alkoxysilyl groups are present, each alkoxysilyl group may be the same as or different from every other alkoxysilyl group.

The alkoxysilyl group can form a chemical bond by reaction with a hydrolysis and polycondensation product of an alkoxide containing an element chosen between Si, Ti, Zr and Al (also referred to as a metal alkoxide), which is mentioned hereinafter. In addition, the alkoxysilyl groups may form a chemical bond between themselves. It is preferable that the hydrophilic polymer is soluble in water and becomes insoluble in water by reaction with the hydrolysis and polycondensation product of a metal alkoxide. The term chemical bond in this case has the same meaning as usual, and is intended to include a covalent bond, an ionic bond, a coordinate bond and a hydrogen bond. The chemical bond is preferably a covalent bond.

It is preferable that a linkage group lies between a repeating unit containing a hydrophilic group and an alkoxysilyl group, or between a repeating unit containing a hydrophilic group and the main chain.

The hydrophilic polymer is preferably a hydrophilic polymer including a structure represented by the following formula (I) or the following formula (II).

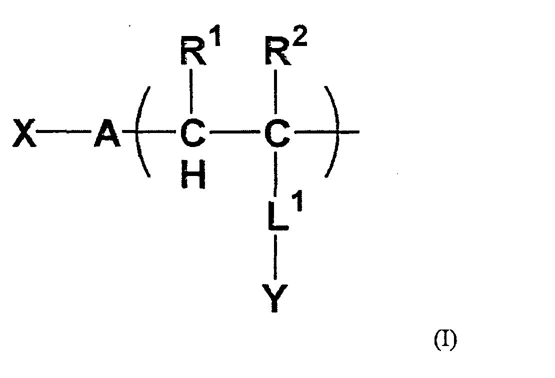

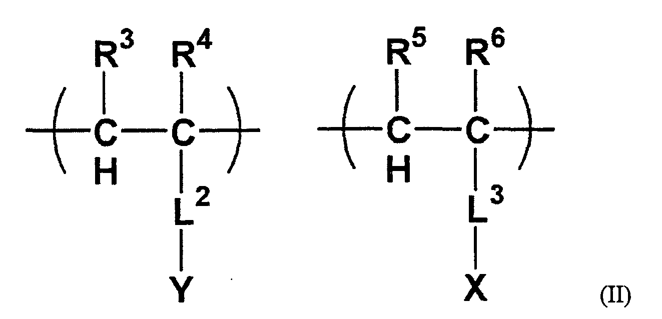

In the formulae (I) and (II), each of R¹, R², R³, R⁴, R⁵ and R⁶ independently represents a hydrogen atom or a hydrocarbon group, X represents a group represented by the foregoing formula (a), each of A, L¹, L² and L³ independently represents a single bond or a linkage group, and Y represents -NHCOR, -CONH₂, -NR₂, -CONR₂, -COR, -OH, -CO₂M, -SO₃M, -PO₃M, -OPO₃M, -(CH₂CH₂O)ₙH, -(CH₂CH₂O)ₙCH₃ or NR₃Z¹, wherein R represents an alkyl group, an aryl group or an aralkyl group, and when two or more Rs are present, each R may be the same as or different from every other R, M represents a hydrogen atom, an alkali metal, an alkaline earth metal or an onium, n represents an integer, and Z¹ represents a halogen ion.

Because a plurality of hydrolyzable silyl groups can be introduced per molecule, the hydrophilic polymer including the structure represented by the formula (II) is especially preferred.

### (Hydrophilic Polymer having Structure represented by Formula (I))

The hydrophilic polymer having the structure represented by the formula (I) can be synthesized e.g. by performing radical polymerization of a hydrophilic monomer (such as acrylamide, acrylic acid or potassium salt of 3-sulfopropyl methacrylate) in the presence of a chain transfer agent (as described in Kamachi Mikiharu & Endo Takeshi, Radical Jugo Handbook, NTS) or an inferter (Otsu, Macromolecules, 1986, 19, p.287). Examples of a chain transfer agent include 3-mercaptopropionic acid, 2-aminoethanethiol hydrochloride, 3-mercaptopropanol, 2-hydroxyethyl disulfide and 3-mercaptopropyltrimethoxysilane. Alternatively, without using a chain transfer agent, radical polymerization of a hydrophilic monomer (e.g. acrylamide) may be carried out by use of a reactive group-containing radical polymerization initiator.

The hydrophilic polymer having the structure represented by the formula (I) is a polymer having a reactive group at its end. In the formula (I), each of R¹ and R² independently represents a hydrogen atom or a hydrocarbon group. The hydrocarbon group includes alkyl groups and aryl groups. Among them, straight-chain, branched or cyclic alkyl groups having 1 to 8 carbon atoms are preferable. Concrete examples of such alkyl groups include a methyl group, an ethyl group, a propyl group, a butyl group, a pentyl group, a hexyl group, a heptyl group, an octyl group, an isopropyl group, an isobutyl group, a s-butyl group, a t-butyl group, an isopentyl group, a neopentyl group, a 1-methylbutyl group, an isohexyl group, a 2-ethylhexyl group, a 2-methylhexyl group, a cyclopentyl group and the like. In terms of both effectiveness and availability, each of R¹ and R² is preferably a hydrogen atom, a methyl group or an ethyl group.

These hydrocarbon groups may further have substituents. When an alkyl group has a substituent, the substituted alkyl group is formed by bonding a substituent and an alkylene group together. Herein, a univalent nonmetal atom group, exclusive of a hydrogen atom, is used as the substituent. Suitable examples of the substituent include a halogen atom (-F, -Br, -Cl or -I), a hydroxyl group, an alkoxy group, an aryloxy group, an alkylthio group, an arylthio group, an amino group, an N-alkylamino group, an N,N-dialkylamino group, an acyloxy group, an N-alkylcarbamoyloxy group, an N-arylcarbamoyloxy group, an acylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N-alkyl-N-arylcarbamoyl group, a sulfo group, a sulfonato group, a sulfamoyl group, an N-alkylsulfamoyl group, an N,N-dialkylsulfamoyl group, an N-arylsulfamoyl group, an N-allcyl-N-arylsulfamoyl group, a phosphono group, a phosphonato group, a dialkylphosphono group, a diarylphosphono group, a monoalkylphosphono group, an alkylphophonato group, a monoarylphosphono group, an arylphosphonato group, a phosphonoxy group, a phosphonatoxy group, an aryl group and an alkenyl group.

On the other hand, the alkylene group in a substituted alkyl group can be a divalent organic residue formed e.g. by removing any one of the hydrogen atoms on an alkyl group having 1 to 8 carbon atoms. Suitable examples of the alkylene group include a straight-chain alkylene group having 1 to 12 carbon atoms, a branched alkylene group having 3 to 12 carbon atoms and a cyclic alkylene group having 5 to 10 carbon atoms. Suitable examples of a substituted alkyl group formed by combining such a substituent and an alkylene group include a hydroxymethyl group, a chloromethyl group, a bromomethyl group, a 2-chloroethyl group, a trifluoromethyl group, a methoxymethyl group, a methoxyethoxyethyl group, an allyloxymethyl group, a phenoxymethyl group, methylthiomethyl and tolylthiomethyl groups, an ethylaminoethyl group, a diethylaminopropyl group, a morpholinopropyl group, an acetyloxymethyl group, a benzoyloxymethyl group, an N-cyclohexylcarbamoyloxyethyl group, an N-phenylcarbamoyloxyethyl group, an acetylaminoethyl group, an N-methylbenzoylaminopropyl group, a 2-oxyethyl group, a 2-oxypropyl group, a carboxypropyl group, a methoxycarbonylethyl group, an allyloxycarbonylbutyl group,

a chlorophenoxycarbonylmethyl group, a carbamoylmethyl group, an N-methylcarbamoylethyl group, an N,N-dipropylcarbamoylmethyl group, an N-(methoxyphenyl)carbamoylethyl group, an N-methyl-N-(sulfophenyl)carbamoylmethyl group, a sulfobutyl group, a sulfonatobutyl group, a sulfamoylbutyl group, an N-ethylsulfamoylmethyl group, an N,N-dipropylsulfamoylpropyl group, an N-tolylsulfamoylpropyl group, an N-methyl-N-(phosphonophenyl)sulfamoyloctyl group, a phosphonobutyl group, a phosphonatohexyl group, a diethylphosphonobutyl group, a diphenylphosphonopropyl group, a methylphosphonobutyl group, a methylphosphonatobutyl group, a tolylphosphonohexyl group, a triphosphonatohexyl group, a phosphonoxypropyl group, a phosphonatoxybutyl group, a benzyl group, a phenethyl group, an α-methylbenzyl group, a 1-methyl-1-phenylethyl group, a p-methylbenzyl group, a cinnamyl group, an allyl group, a 1-propenylmethyl group, a 2-butenyl group, a 2-methylallyl group, a 2-methylpropenylmethyl group, a 2-propynyl group, 2-butynyl group, 3-butynyl group and the like.

Of these groups, a hydroxymethyl group is preferred over the others from the viewpoint of hydrophilicity.

A and L¹ each represent a single bond or an organic linkage group. The organic linkage group represented by A and L¹ each is a polyvalent linkage group including nonmetal atoms, and it is made up of 0 to 60 carbon atoms, 0 to 10 nitrogen atoms, 0 to 50 oxygen atoms, 0 to 100 hydrogen atoms and 0 to 20 sulfur atoms. Specifically, it is appropriate that each of A and L¹ be chosen from linkage groups including -N<, an aliphatic group, an aromatic group, a heterocyclic group and combinations thereof, or it is appropriate that each of A and L¹ be -O-, -S-, -CO-, -NH- or a divalent linkage group of combination containing -O- or -S- or -CO- or -NH-.
Examples of a more specific linkage group can include the following structural units or combinations thereof.

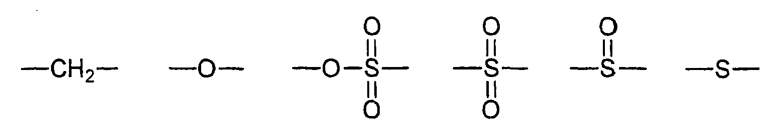

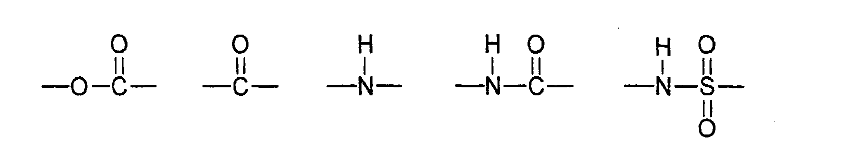

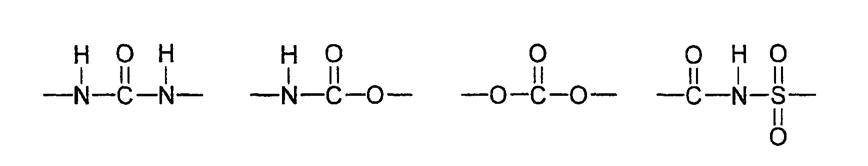

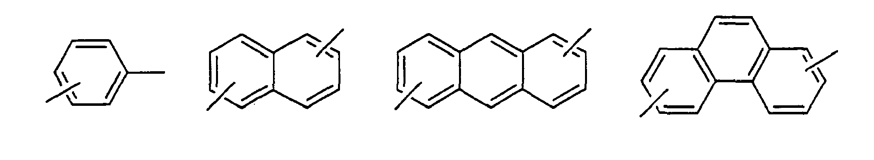

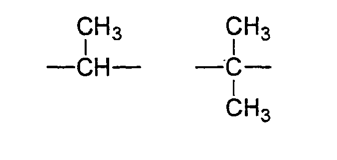

Each of A and L¹ is preferably -CH₂CH₂CH₂S-, -CH₂S-, -CONHCH(CH₃)CH₂-, -CONH-, -CO-, -CO₂- or -CH₂-.

In the formula (I), Y represents NHCOR, -CONH₂, -N(R)₂, -CON(R)₂, -COR, -OH, -CO₂M, -SO₃M, -PO₃M, -OPO₃M, -(CH₂CH₂O)ₙH, -(CH₂CH₂O)ₙCH₃ or N(R)₃Z¹, wherein R is preferably a straight-chain, branched or cyclic alkyl group having 1 to 18 carbon atoms, an aryl group or an aralkyl group, and when two or more Rs are present, each R is the same as or different from every other R, M represents a hydrogen atom, an alkali metal, an alkaline earth metal or an onium, n represents an integer, and Z¹ represents a halogen ion. In addition, when Y has more than one R as in -CON(R)₂, Rs may combine to form a ring and the ring formed may be a hetero ring containing a hetero atom such as an oxygen atom, a sulfur atom or a nitrogen atom. Further, R may have a substituent, and examples of the substituent which can be introduced thereinto include the same ones as included in the examples of substituents which can be introduced in the case where R¹ and R² are alkyl groups.

To be more specific, the group suitable as R is a methyl group, an ethyl group, a propyl group, a butyl group, a pentyl group, a hexyl group, a heptyl group, an octyl group, an isopropyl group, an isobutyl group, an s-butyl group, a t-butyl group, an isopentyl group, a neopentyl group, a 1-methylbutyl group, an isohexyl group, a 2-ethylhexyl group, a 2-methylhexyl group, a cyclopentyl group or the like. And as examples of M, a hydrogen atom, an alkali metal such as lithium, sodium or potassium, an alkaline earth metal such as calcium or barium, or an onium such as ammonium, iodonium or sulfonium are given.

As Y, to be more specific, -NHCOCH₃, -CONH₂, -CON(CH₃)₂, -COOH, -S0₃NMe₄⁺, -SO₃⁻K⁺, -(CH₂CH₂O)ₙH, a morpholyl group or the like is preferred. Y is far preferably -NHCOCH₃, -CONH₂, -CON(CH₃)₂, -SO₃⁻K⁺ or -(CH₂CH₂O)ₙH.

### n preferably represents an integer of 1 to 100.

The hydrophilic polymer having the structure represented by the formula (I) can be synthesized by using a radical polymerizable monomer represented by the following formula (i) and a silane coupling agent, which is represented by the following formula (ii) and has a chain transfer function in radical polymerization, and subjecting them to radical polymerization. Because the silane coupling agent (ii) has a chain transfer function, a polymer whose main chain end a silane coupling group is introduced into can be synthesized in radical polymerization.

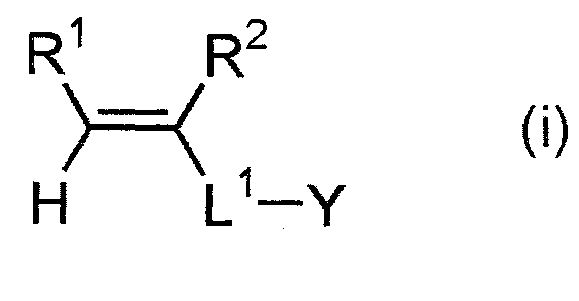

X-A-SH (ii)

In the formulae (i) and (ii), A, R¹ to R², Lay and Y have the same meanings as those in the formula (I), respectively. These compounds are commercially available, and can also be synthesized with ease. The radical polymerizable monomer represented by the formula (i) has a hydrophilic group Y, and this monomer forms a structural unit in a hydrophilic polymer.

The hydrophilic polymer containing the structure represented by the formula (I) may be a copolymer of the foregoing monomer and another monomer. Examples of another monomer which can be used include publicly known monomers such as acrylic acid esters, methacrylic acid esters, acrylamides, methacrylamides, vinyl esters, styrenes, acrylic acid, methacrylic acid, acrylonitrile, maleic anhydride and maleinimide. By polymerizing together with such comonomers, improvements in various properties including film formability, film strength, hydrophilicity, hydrophobicity, solubility, reactivity, stability and so on can be brought about.

Examples of acrylic acid esters include methyl acrylate, ethyl acrylate, (n- or i-)propyl acrylate, (n-, i-, sec- or t-)butyl acrylate, amyl acrylate, 2-ethylhexyl acrylate, dodecyl acrylate, chloroethyl acrylate, 2-hydroxyethyl acrylate, 2-hydroxypropyl acrylate, 2-hydroxypentyl acrylate, cyclohexyl acrylate, allyl acrylate, trimethylolpropane monoacrylate, pentaerythritol monoacrylate, benzyl acrylate, methoxybenzyl acrylate, chlorobenzyl acrylate, hydroxybenzyl acrylate, hydroxyphenethyl acrylate, dihydroxyphenethyl acrylate, furfuryl acrylate, tetrahydrofurfuryl acrylate, phenyl acrylate, hydroxyphenyl acrylate, chlorophenyl acrylate, sulfamoylphenyl acrylate, 2-(hydroxyphenylcarbonyloxy)ethyl acrylate and the like.

Examples of methacrylic acid esters include methyl methacrylate, ethyl methacrylate, (n- or i-)propyl methacrylate, (n-, i-, sec- or t-)butyl methacrylate, amyl methacrylate, 2-ethylhexyl methacrylate, dodecyl methacrylate, chloroethyl methacrylate, 2-hydroxyethyl methacrylate, 2-hydroxypropyl methacryalte, 2-hydroxypentyl methacrylate, cyclohexyl methacrylate, allyl methacrylate, trimethylolpropane monomethacrylate, pentaerythritol monomethacrylate, benzyl methacrylate, methoxybenzyl methacrylate, chlorobenzyl methacrylate, hydroxybenzyl methacrylate, hydroxyphenethyl methacrylate, dihydroxyphenethyl methacrylate, furfuryl methacrylate, tetrahydrofurfuryl methacrylate, phenyl methacrylate, hydroxyphenyl methacrylate, chlorophenyl methacrylate, sulfamoylphenyl methacrylate, 2-(hydroxyphenylcarbonyloxy)ethyl methacrylate and the like.

Examples of acrylamides include acrylamide, N-methylacrylamide, N-ethylacrylamide, N-propylacrylamide, N-butylacrylamide, N-benzylacrylamide, N-hydroxyethylacrylamide, N-phenylacrylamide, N-tolylacrylamide, N-(hydroxyphenyl)acrylamide, N-(sulfamoylphenyl)acrylamide, N-(phenylsulfonyl)acrylamide, N-(tolylsulfonyl)acrylamide, N,N-dimethylacrylamide, N-methyl-N-phenylacrylamide N-hydroxyethyl-N-methylacrylamide and the like.

Examples of methacrylamides include methacrylamide, N-methylmethacrylamide, N-ethylmethacrylamide, N-propylmethacrylamide, N-butylmethacrylamide, N-benzylmethacrylamide, N-hydroxyethylmethacrylamide, N-phenylmethacrylamide, N-tolylmethacrylamide, N-(hydroxyphenyl)methacrylamide, N-(sulfamoylphenyl)methacrylamide, N-(phenylsulfonyl)methacrylamide, N-(tolylsulfonyl)methacrylamide, N,N-dimethylmethacrylamide, N-methyl-N-phenylmethacrylamide, N-hydroxyethyl-N-methylmethacrylamide and the like.

Examples of vinyl esters include vinyl acetate, vinyl butyrate, vinyl benzoate and the like.
Examples of styrenes include styrene, methylstyrene, dimethylstyrene, trimethylstyrene, ethylstyrene, propylstyrene, cyclohexylstyrene, chloromethylstyrene, trifluoromethylstyrene, ethoxymethylstyrene, acetoxymethylstyrene, methoxystyrene, dimethoxystyrene, chlorostyrene, dichlorostyrene, bromostyrene, iodostyrene, fluorostyrene, carboxystyrene and the like.

The mass-average molecular weight of a hydrophilic polymer containing the structure represented by the formula (I) is preferably from 1,000 to 1,000,000, far preferably from 1,000 to 500,000, especially preferably from 1,000 to 200,000.

Examples of a hydrophilic polymer which can be used suitably in the invention and has the structure represented by the formula (I) are illustrated below, but the invention should not be construed as being limited to these examples.

| | | Mass-average Molecular weight |
|---|---|---|
| 1 | 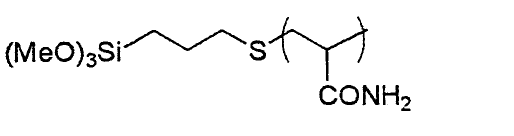 | 5,000 |
| 2 | 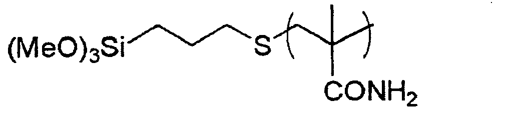 | 6,000 |
| 3 | 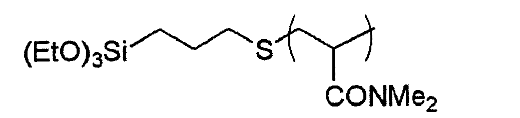 | 10,000 |
| 4 | 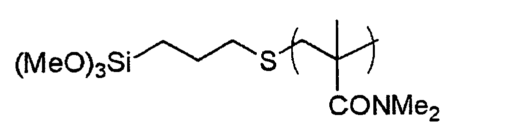 | 8,000 |
| 5 | 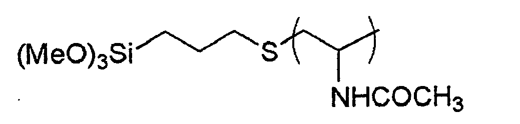 | 15,000 |
| 6 | 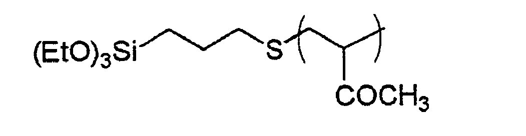 | 10,000 |
| 7 | 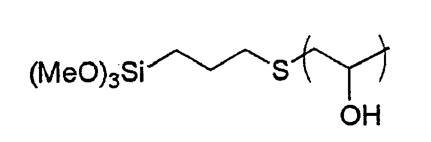 | 30,000 |
| 8 | 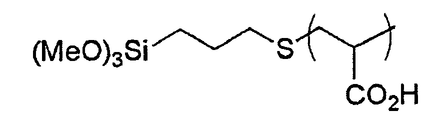 | 5,000 |
| 9 | 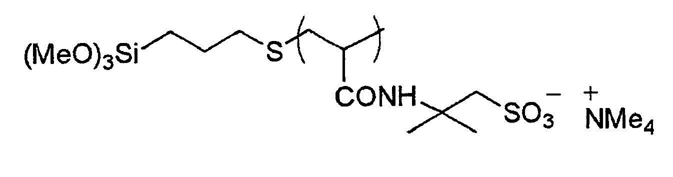 | 10,000 |
| 10 | 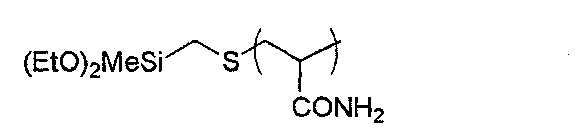 | 20,000 |
| 11 | 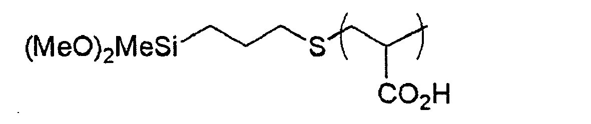 | 7,000 |
| 12 | 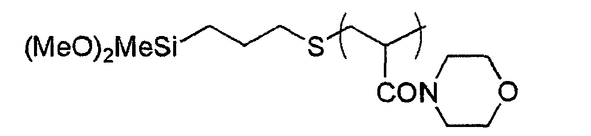 | 15,000 |
| 13 | 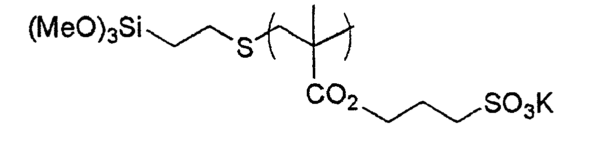 | 5,000 |

### (Hydrophilic Polymer having Structure represented by Formula (II))

In the formula (II), each of R³, R⁴, R⁵ and R⁶ independently represents a hydrogen atom or a hydrocarbon group, and its examples and preferred range are the same as those of R¹ and R² each in the formula (I). Each of L² and L³ independently represents a single bond or a linkage group, and its examples and preferred rang are the same as those of L¹ in the formula (I). Y and X have the same definitions as those have in the formula (I), respectively, and their respective examples and preferred ranges are the same as in the formula (I).

In the formula (II), L³ is preferably a single bond or a linkage group having at least one structure selected from the group consisting of -CONH-, -NHCONH-, -OCONH-, -SO₂NH- and -So₃-.

Each of the compounds used for synthesizing a hydrophilic polymer having the structure represented by the formula (II) is commercially available, and can also be synthesized with ease.
To radical polymerization for synthesis of a hydrophilic polymer having the structure represented by the formula (II), any of publicly known traditional methods can be applied.
More specifically, typical radical polymerization methods are described e.g. in Shin Kobunshi Jikkengaku 3 (1996, KYORITSU SHUPPAN CO., LTD.), Kobunshi no Gosei to Hannou 1 (compiled by Kobunshi Gakkai, 1992, KYORITSU SHUPPAN CO., LTD.), Shin Jikken Kagaku Koza 19 (1978, MARUZEN Co., Ltd.), Kobunshi Kagaku (I) (compiled by The Chemical Society of Japan, 1996, MARUZEN Co., Ltd.), Kobunshi Gosei Kagaku (Busshitu Kogaku Koza, 1995, Tokyo Denki University Press) and so on, and these methods can be applied.

The hydrophilic polymer having the structure represented by the formula (II), as mentioned hereinafter, may be a copolymer formed by polymerization with other monomers.

The mass-average molecular weight of the hydrophilic polymer containing the structure represented by the formula (II) is preferably from 1,000 to 1,000,000, far preferably from 1,000 to 500,000, especially preferably from 1,000 to 200,000.

As to the copolymerization ratio in the hydrophilic polymer containing the structure represented by the formula (II), the ratio of the mole fraction of the Y-containing structural units (m₂) to the mole fraction of the X-containing structural units (n₂), namely m₂/n₂, is preferably from 30/70 to 99/1, far preferably from 40/60 to 98/2, especially preferably from 50/50 to 97/3. So long as m₂/n₂ is 30/70 or higher, there is no shortage of hydrophilicity; while the m₂/n₂ ratio of 99/1 or lower can ensure a sufficient amount of reactive groups and allows attainment of adequate curing, and by extension satisfactory film strength.
The copolymerization ratio can be determined from measurements with nuclear magnetic resonance (NMR) apparatus, or by preparing calibration curves of standard substances and performing measurements with an infrared spectrophotometer.

Examples of the hydrophilic polymer having the structure represented by the formula (II) are illustrated below together with their respective mass-average molecular weights (M.W.), but these examples should not be construed as limiting the scope of the invention. Additionally, each of the polymers given as the following examples refers to a random copolymer containing its individual structural units at the mole ratio specified therein.

| | | |
|---|---|---|
| (1) | 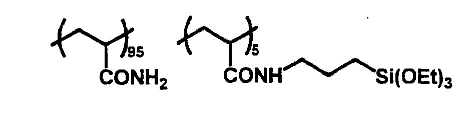 | M.W. 8,500 |
| (2) | 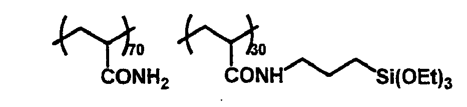 | M.W. 9,000 |
| (3) | 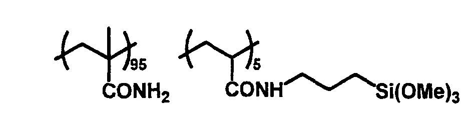 | M.W. 12,000 |
| (4) | 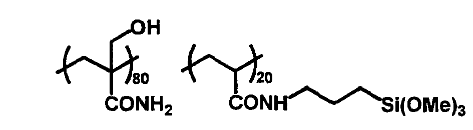 | M.W. 10,000 |
| (5) | 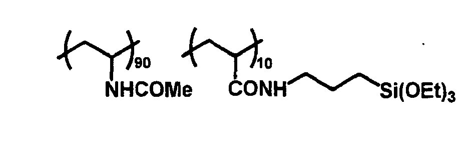 | M.W. 7,000 |
| (6) | 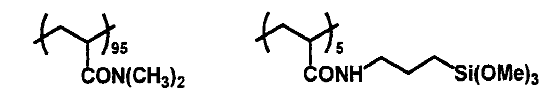 | M.W. 9,700 |
| (7) | 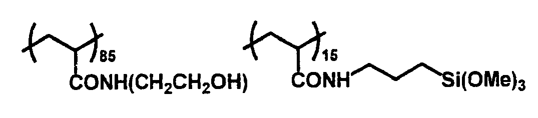 | M.W. 15,000 |
| (8) | 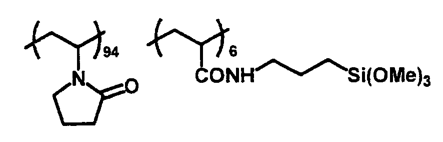 | M.W. 7,600 |
| (9) | 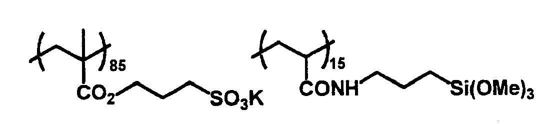 | M.W. 20,000 |
| (10) | 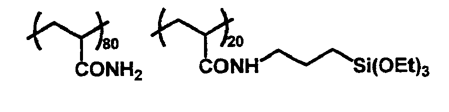 | M.W. 20,000 |

| | | |
|---|---|---|
| (11) | 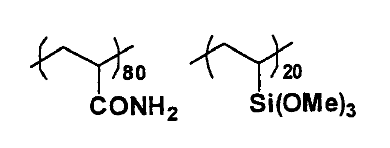 | M.W. 6,000 |
| (12) | 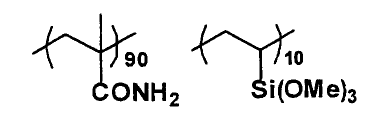 | M.W. 7,900 |
| (13) | 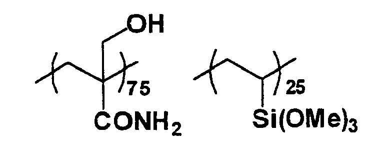 | M.W. 9,000 |
| (14) | 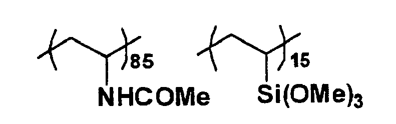 | M.W. 8,600 |
| (15) | 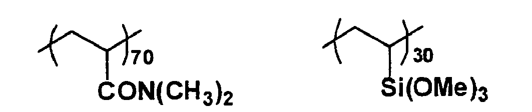 | M.W. 10,000 |
| (16) | 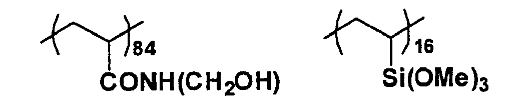 | M.W. 15,000 |
| (17) | 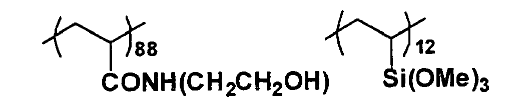 | M.W. 30,000 |
| (18) | 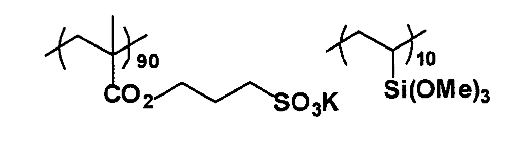 | M.W. 50,000 |
| (19) | 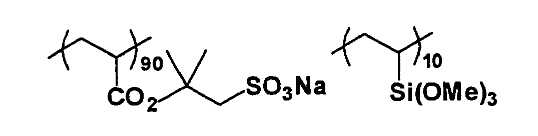 | M.W. 36,000 |
| (20) | 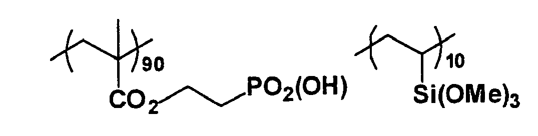 | M.W. 28,000 |

| | | |
|---|---|---|
| (21) | 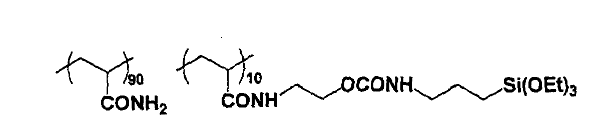 | M.W.15,000 |
| (22) | 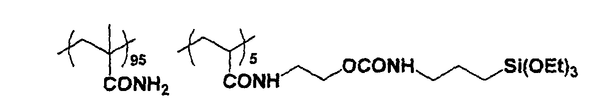 | M.W. 20,000 |
| (23) | 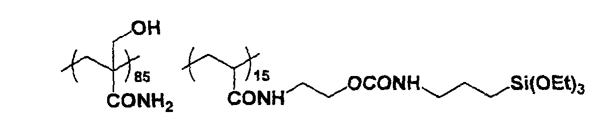 | M.W. 13,000 |
| (24) | 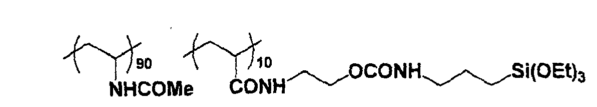 | M.W. 25,000 |
| (25) | 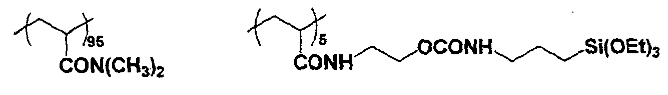 | M.W. 35,000 |
| (26) | 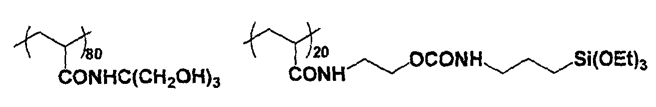 | M.W. 43,000 |
| (27) | 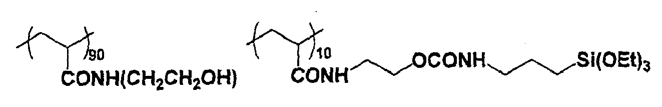 | M.W. 23,000 |
| (28) | 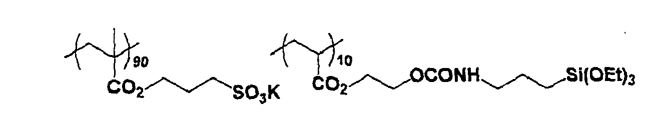 | M.W. 50,000 |
| (29) | 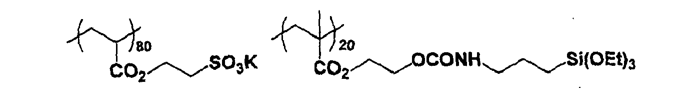 | M.W. 36,000 |
| (30) | 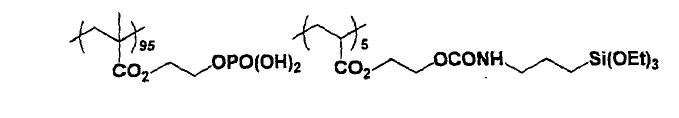 | M.W. 40,000 |

| | | |
|---|---|---|
| (31) | 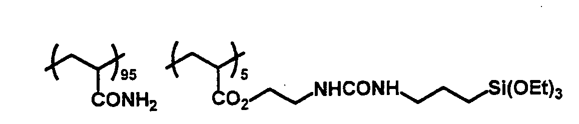 | M.W. 20,000 |
| (32) | 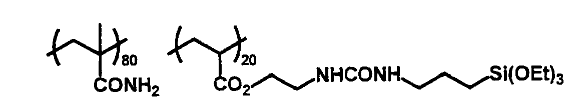 | M.W. 9,000 |
| (33) | 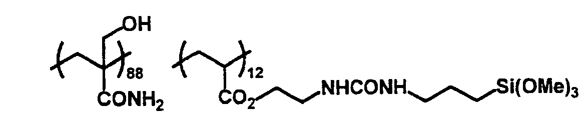 | M.W. 105,000 |
| (34) | 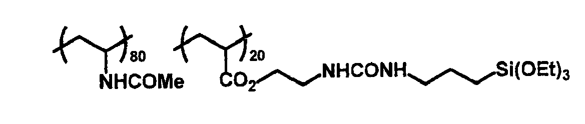 | M.W. 80,000 |
| (35) | 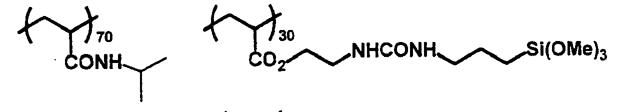 | M.W. 62,000 |
| (36) | 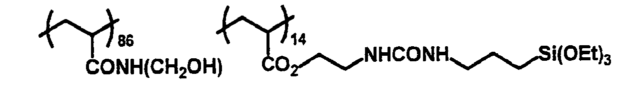 | M.W. 23,000 |
| (37) | 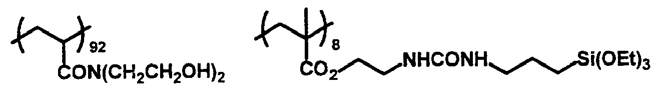 | M.W.39,000 |
| (38) | 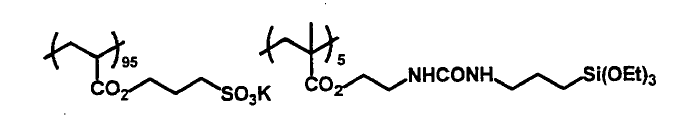 | M.W. 20,000 |
| (39) | 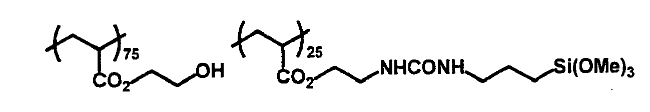 | M.W.11,000 |
| (40) | 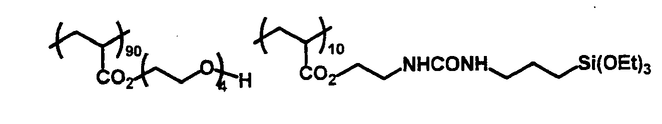 | M.W. 70,000 |

| | | |
|---|---|---|
| (41) | 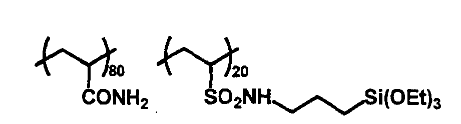 | M.W. 30,000 |
| (42) | 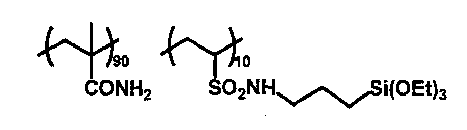 | M.W. 15,000 |
| (43) | 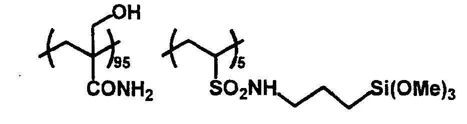 | M.W. 25,000 |
| (44) | 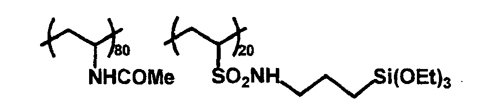 | M.W. 180,000 |
| (45) | 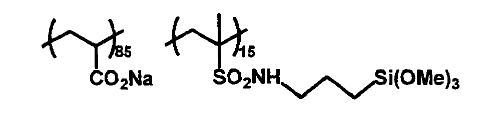 | M.W. 52,000 |
| (46) | 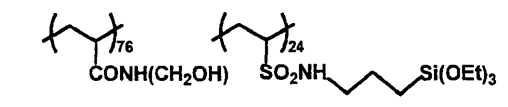 | M.W. 25,000 |
| (47) | 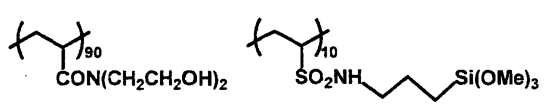 | M.W. 60,000 |
| (48) | 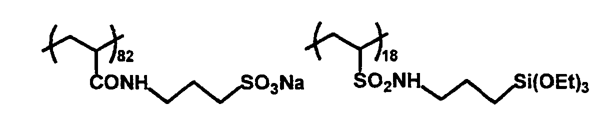 | M.W. 8,000 |
| (49) | 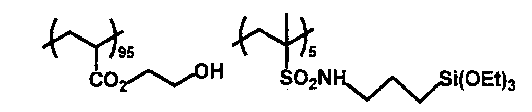 | M.W. 200,000 |
| (50) | 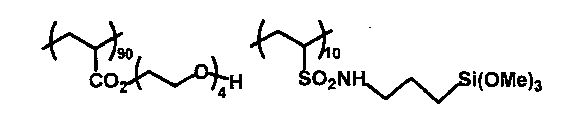 | M.W. 97,000 |

The hydrophilic polymer having the structure represented by the formula (II) may be a copolymer of monomers from which the foregoing structural units are derived and another comonomer. Examples of another comonomer which can be used include publicly known monomers such as acrylic acid esters, methacrylic acid esters, acrylamides, methacrylamides, vinyl esters, styrenes, acrylic acid, methacrylic acid, acrylonitrile, maleic anhydride and maleinimide. Examples of each of these monomers include the same compounds as those recited hereinbefore. By copolymerizing such comonomers, improvements in various properties including film formability, film strength, hydrophilicity, hydrophobicity, solubility, reactivity, stability and so on can be brought about.

It is preferable that the proportion of the other comonomers, though required to be high enough to improve various physical properties, is not overly high in order that the function as hydrophilic film and benefits of the structure represented by the formula (II) are ensured properly. Therefore, the total proportion of the structural units derived from other comonomers in the hydrophilic polymer is preferably 80 mass% or below, far preferably 50 mass% or below.

In the hydrophilic composition according to the invention, hydrophilic polymers having the structures represented by the formula (I) or (II) may be contained alone or in combination of two or more thereof.

Examples of a hydrophilic polymer other than the foregoing ones include polyacrylic acids, polymethacrylic acids, polyacrylamides and their sulfonic acid esters, each of which contains a polar group such as -OH, -COOH, an amino group or so on. Specific examples of such a hydrophilic polymer are illustrated below.

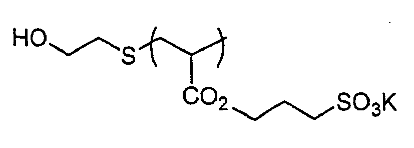

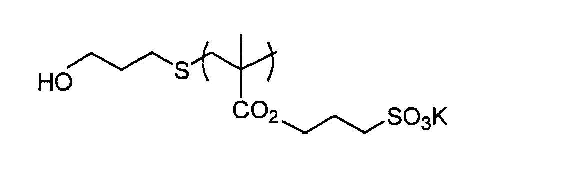

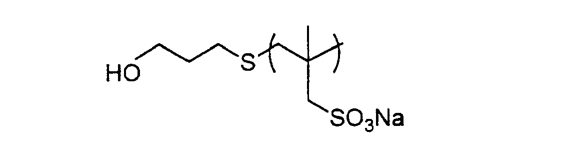

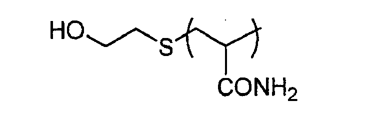

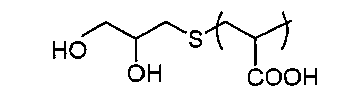

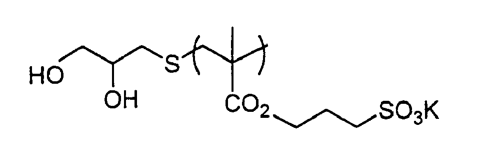

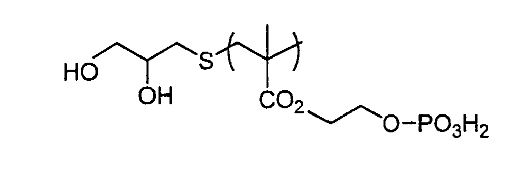

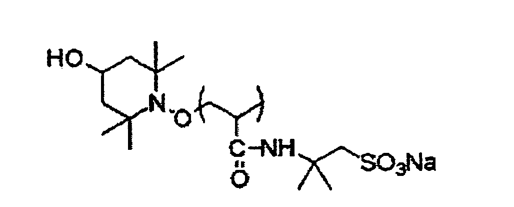

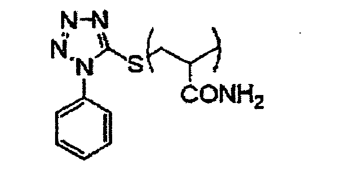

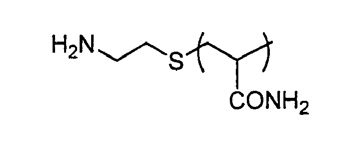

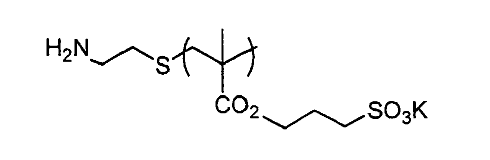

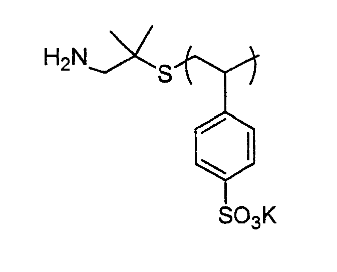

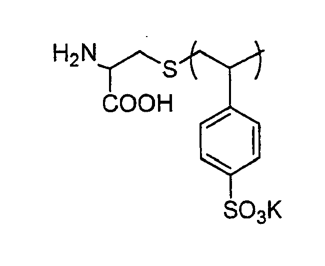

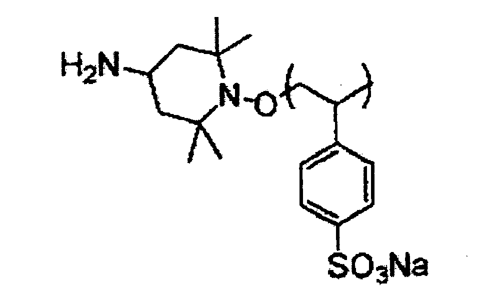

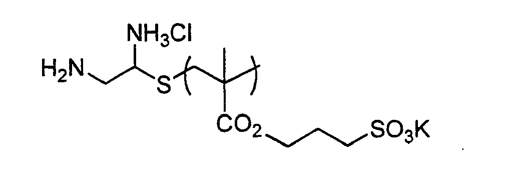

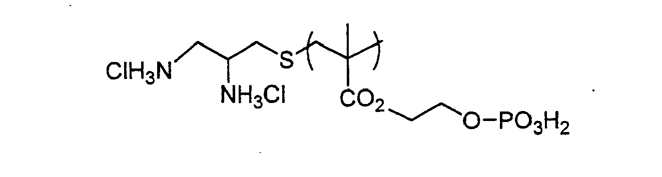

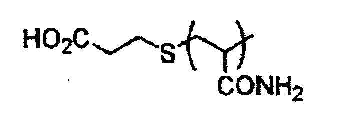

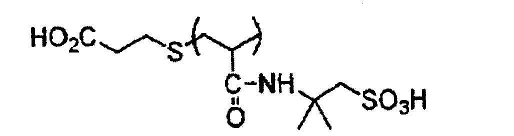

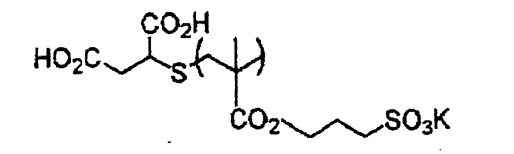

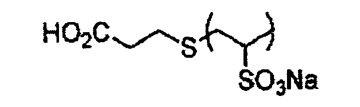

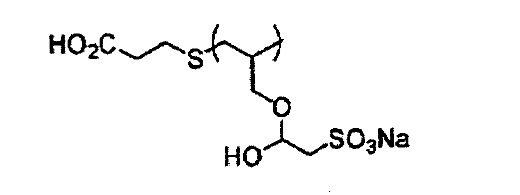

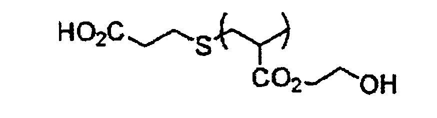

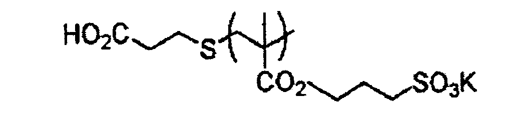

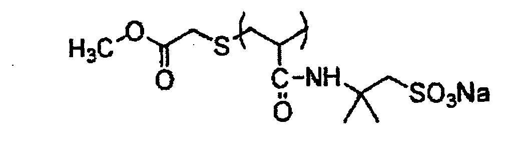

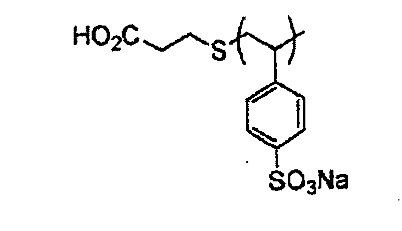

In terms of curability and hydrophilicity, hydrophilic polymers concerning the invention are preferably contained in a proportion ranging from 20 to 100 mass% with respect to the solid (nonvolatile component) content of the hydrophilic composition according to the invention. The proportion is far preferably from 50 to 100 mass%. Herein, the term nonvolatile component refers to all ingredients but a volatile solvent.

When the hydrophilic composition contains both the hydrophilic polymer having the structure represented by the formula (I) and the hydrophilic polymer having the structure represented by the formula (II), the suitable mass ratio of the hydrophilic polymer having the structure represented by the formula (I) to the hydrophilic polymer having the structure represented by the formula (II) (hydrophilic polymer having the structure represented by the formula (I)/hydrophilic polymer having the structure represented by the formula (II)) is from 50/50 to 5/95.

The hydrophilic polymer having the structure represented by the formula (I) or (II) forms cross-linked film in a state that it is mixed with the hydrolysis and polycondensation products of a metal alkoxide. The hydrophilic polymers as an organic component are concerned in film strength and film flexibility, and in special cases where a 5% aqueous solution of hydrophilic polymer has its viscosity in a range of 0.1 to 100 mPa·s, preferably 0.5 to 70 mPa·s, far preferably 1 to 50 mPa·s, as measured at 20°C, the film formed has satisfactory physical properties. The viscosity can be measured with an E-type viscometer (trade name: RE80L, made by TOKYO KEIKI INC.).

Examples of a solvent used in synthesizing the hydrophilic polymers include tetrahydrofuran, ethylene dichloride, cyclohexanone, methyl ethyl ketone, acetone, methanol, ethanol, propanol, acetonitrile, ethylene glycol monomethyl ether, ethylene glycol monoethyl ether, 2-methoxyethyl acetate, diethylene glycol dimethyl ether, 1-methoxy-2-propanol, 1-methoxy-2-propyl acetate, N,N-dimethylformamide, N,N-dimethylacetamide, N-methylpyrrolidone, toluene, ethyl acetate, methyl lactate, ethyl lactate, dimethyl sulfoxide, water and so on. These solvents are used alone or as a mixture of two or more thereof.
As a radical polymerization initiator used in synthesizing the hydrophilic polymers, publicly known compounds such as azo-type initiators, peroxide-type initiators and redox-type initiators can be employed.

### [Alkoxide Compound of Metal Chosen between Si, Ti, Zr and Al]

The metal alkoxide compounds usable in the invention are hydrolysis-polymerizable compounds that have in their respective structures functional groups capable of being hydrolyzed and causing polycondensation and fulfill their function as a cross-linking agent, and strong film having a cross-linked structure is formed through polycondensation taking place between metal alkoxides, what's more the metal alkoxides form chemical bonds with the hydrophilic polymers. The metal alkoxides can be represented by the formula (I-1) and the formula (I-2). In the formulae, R⁸ represents a hydrogen atom, an alkyl group or an aryl group, R⁹ represents an alkyl group or an aryl group, Z represents Si, Ti or Zr, and m represents an integer of 0 to 2. When each of R⁸ and R⁹ represents an alkyl group, the number of carbon atoms contained therein is preferably from 1 to 4. The alkyl group and the aryl group each may have a substituent, and examples of a substituent which can be introduced into such a group include a halogen atom, an amino group and a mercapto group. Additionally, each compound is a low molecular-weight compound, and the molecular weight thereof is preferably 2,000 or below.

(R⁸)ₘ-Z-(OR⁹)₄₋ₘ (I-1)

Al-(OR⁹)₃ (I-2)

Examples of hydrolyzable compounds represented by the formula (I-1) and the formula (I-2) are recited below, but the invention should not be construed as being limited to these examples. In the case where Z is Si, namely the case of containing silicon in such a hydrolyzable compound, examples of the hydrolyzable compound include trimethoxysilane, tetramethoxysilane, tetraethoxysilane, tetrapropoxysilane, methyltrimethoxysilane, dimethyldimethoxysilane, γ-chloropropyltriethoxysilane, γ-mercaptopropyltrimethoxysilane, γ-aminopropyltriethoxysilane, phenyltrimethoxysilane, diphenyldimethoxysilane and the like. Of these silanes, trimethoxysilane, tetramethoxysilane, tetraethoxytsilane, methyltrimethoxysilane, dimethyldimethoxysilane, phenyltrimethoxysilane and the like are especially preferable to the others.

In the case where Z is Ti, namely the case of containing titanium, examples of the hydrolyzable compound include trimethoxytitanate, tetramethoxytitanate, triethoxytitanate, tetraethoxytitanate, tetrapropoxytitanate, chlorotrimethoxytitanate, chlorotriethoxytitanate, ethyltrimethoxytitanate, methyltriethoxytitanate, ethyltriethoxytitanate, diethyldiethoxytitanate, phenyltrimethoxytitanate, phenyltriethoxytitanate and the like.
In the case where Z is Zr, namely the case of containing zirconium, examples of the hydrolyzable compound include zirconates comparable to the compounds recited above as the titanium-containing ones.
In the other case where the central metal is Al, namely the case of containing aluminum in a hydrolyzable compound such as mentioned above, examples of the hydrolyzable compound include trimethoxyaluminate, triethoxyaluminate, tripropoxyaluminate, triisopropoxyaluminate and the like.
It is appropriate that the alkoxide compound of a metal chosen between Si, Ti, Zr and Al be contained in a proportion of 10 to 80 mass%, preferably 20 to 50 mass%, in the hydrophilic composition.

### [Catalyst]

Metal-complex catalysts usable in forming the hydrophilic layer according to the invention can accelerate hydrolysis and polycondensation of the alkoxide compound of a metal chosen between Si, Ti, Zr and Al, and can bring about formation of bonds with hydrophilic polymers. The metal-complex catalysts preferred in particular are metal complexes which are each constituted of a metal element chosen from the groups 2A, 3B, 4A and 5A in the periodic table and an oxo or hydroxy oxygen-containing compound chosen from β-diketones, keto esters, hydroxycarboxylic acids or their esters, aminoalcohols or enolic active hydrogen compounds. Of the constituent metal elements, the group 2A elements such as Mg, Ca, Sr and Ba, the group 3B element such as Al and Ga, the group 4A elements such as Ti and Zr, and the group 5A element such as Nb and Ta are preferred, and these elements each can form a complex having an excellent catalytic effect. Of these complexes, the complexes formed from Zr, Al or Ti are superior, and they are preferred over the others.

Examples of oxo or hydroxyl oxygen-containing compounds that form ligands of the metal complexes for use in the invention include β-diketones such as acetylacetone (or 2,4-pentadione) and 2,4-heptanedione, ketoesters such as methyl acetoacetate, ethyl acetoacetate and butyl acetoacetate, hydroxycarboxylic acids and their esters such as lactic acid, methyl lactate, salicylic acid, ethyl salicylate, phenyl salicylate, malic acid, tartaric acid and methyl tartarate, ketoalcohols such as 4-hydroxy-4-methyl-2-pentanone, 4-hydroxy-2-pentanone, 4-hydroxy-4-methyl-2-heptanone and 4-hydroxy-2-heptanone, aminoalcohols such as monoethanolamine, N,N-dimethylethanolamine, N-methyl-monoethanolamine, diethanolamine and triethanolamine, enolic active hydrogen compounds such as methylolmelamine, methylolurea, methylolacrylamide and malonic acid diethyl ester, and compounds having substituents at the methyl group, methylene group or carbonyl carbon sites of acetylacetone (or 2,4-pentanedione).

The suitable ligand is acetylacetone or a acetylacetone derivative. The term acetylacetone derivative in the invention refers to a compound having a substituent at the methyl group, methylene group or carbonyl carbon site of acetylacetone. The substituent which acetylacetone can have at its methyl group site is an alkyl group, an acyl group, a hydroxyalkyl group, a carboxyalkyl group, an alkoxy group or an alkoxyalkyl group, each of which has a straight-chain or branched form and contains 1 to 3 carbon atoms; the substituent which acetylacetone can have at its methylene group site is a carboxyl group, or a carboxyalkyl group or a hydroxyalkyl group, each of which has a straight-chain or branched form and contains 1 to 3 carbon atoms; and the substituent which acetylacetone can have at its carbonyl carbon site is an alkyl group having 1 to 3 carbon atoms. In this case, a hydrogen atom is added to the carbonyl oxygen, and a hydroxyl group is formed.

Suitable examples of the acetylacetone derivative include ethylcarbonylacetone, n-propylcarbonylacetone, i-propylcarbonylacetone, diacetylacetone, 1-acetyl-1-propionyl-acetylacetone, hydroxyethylcarbonylacetone, hydroxypropylcarbonylacetone, acetoacetic acid, acetopropionic acid, diacetoacetic acid, 3,3-diacetopropionic acid, 4,4-diacetobutyric acid, carboxyethylcarbonylacetone, carboxypropylcarbonylacetone and diacetone alcohol.

Among them, acetylacetone and diacetylacetone in particular are preferred. The complex of an acetylacetone derivative and a metal element is a mononuclear complex formed by coordination of 1 to 4 molecules of an acetylacetone derivative to one metal element, and when the number of coordination hands a metal element can have is greater than the number of total coordination-capable hands of acetylacetone derivatives, general-purpose ligands used in usual complexes, such as a water molecule, a halogen ion, a nitro group, an ammonio group and so on, may coordinate to the metal element.

Suitable examples of such a metal complex include tris(acetylacetonato)aluminum complex salts, di(acetylacetonato)aquoaluminum complex salts, mono(acetylacetonato)chloroaluminum complex salts, di(diacetylacetonato)aluminum complex salts, ethylacetoacetatealuminum diisopropylate, aluminum tris(ethylacetoacetate), cyclic aluminum oxide isopropylate, tris(acetylacetonato)barium complex salts, di(acetylacetonato)titanium complex salts, tris(acetylacetonato)titanium complex salts, di-i-propoxybis(acetylacetonato)titanium complex salts, zirconium tris(ethylacetoacetate), zirconium-tris(benzoic acid) complex salts, and the like. These complex salts have high stability in an aqueous-based coating solution and are superior in the effect of accelerating gelation in sol-gel reaction at heat drying time. Of those complex salts, ethylacetoacetatealuminum diisopropylate, aluminum tris(ethylacetoacetate), di(acetylacetonato)titanium complex salts and zirconium tris(ethylacetoacetate) are especially preferable to the others.

Although descriptions about counter salts of the metal complexes are omitted in this specification, any kinds of counter salts are all right so long as they can render the resulting complex salts water-soluble and electrically neutral, and more specifically, any of salt forms that can ensure stoichiometric neutrality, such as nitrate, hydrohalide, sulfate and phosphate, may be used. Detailed description about the behavior of metal complexes in silica sol-gel reaction can be found in J. Sol-Gel Sci. and Tec. 16, 209(1999). As to the reaction mechanism, the scheme as mentioned below is assumed. Specifically, it is supposed that the metal complexes are stable in coating solutions because they take on coordination structure, and in dehydration condensation reaction beginning in the heat-drying process after coating, they accelerate cross-linking by a mechanism similar to that of acid catalysts. At any rate, the use of those metal complexes has come to satisfy not only improvements in temporal stability and film surface quality, but also high hydrophilicity and high durability.

The metal complex catalysts as recited above may be used in combination with other catalysts that can accelerate hydrolysis and polycondensation of alkoxide compounds of a metal chosen between Si, Ti, Zr and Al and cause formation of bonds with hydrophilic polymers. Examples of these catalysts include compounds showing acidity, such as hydrogen halides including hydrogen chloride and the like, nitric acid, sulfuric acid, sulfurous acid, hydrogen sulfide, perchlorid acid, hydrogen peroxide, carbonic acid, carboxylic acids including formic acid, acetic acid and the like, substituted carboxylic acids obtained by substituting other elements or substituents for R in the formula represented by RCOOH, and sulfonic acids including benzenesulfonic acid and the like; and basic compounds, such as ammoniac bases including ammonia water and the like, and amines including ethylamine, aniline and the like.
The metal complex catalysts are easily available as commercial products, and besides, they can be prepared by publicly known methods such as reaction between metal chlorides and alcohol.
The suitable content of catalysts is from 1 to 20 mass%, preferably from 1 to 10 mass%, with respect to the total solids content in the hydrophilic composition.

### [Antimicrobial Agent]

Into a hydrophilic coating liquid composition, an antimicrobial agent can be incorporated in order to render the present cover anti-bacterial, anti-fungal and anti-algal. In forming the hydrophilic layer, it is appropriate that a hydrophilic or water-soluble antimicrobial agent be incorporated. By incorporation of a hydrophilic or water-soluble antimicrobial agent, a cover having excellent anti-bacterial, anti-fungal and anti-algal properties can be obtained without impairment of its surface hydrophilicity. It is appropriate that a compound causing no reduction in cover's hydrophilicity be added as the antimicrobial agent, and examples of such an antimicrobial agent include inorganic antimicrobial agents and water-soluble organic antimicrobial agents. Antimicrobial agents that can be used are those exerting their sterilizing effects against fungi present in the environment, such as bacteria, typified by Staphylococcus aureus and Escherichia coli, and Eumycetes including mold, yeast and the like.

Examples of an organic antimicrobial agent include phenol ether derivatives, imidazole derivatives, sulfone derivatives, N-haloalkylthio compounds, anilide derivatives, pyrrole derivatives, quaternary ammonium salts, a pyridine series, a triazine series, a benzoisothiazoline series, an isothiazoline series, and the like.
To be more specific, such organic antimicrobial agents include 1,2-benzoisothiazoline-3-one, N-fluorodichloromethylthiophthalimide, 2,3,5,6-tetrachloroisophthalonitrile, N-trichloromethylthio-4-cyclohexene-1,2-dicarboxyimide, copper 8-quinolinate, bis(tributyltin) oxide, 2-(4-thiazolyl)benzimidazole (hereinafter designated as TBZ), 2-benzimidazolecarbamic acid methyl ester (hereinafter designated as BCM), 10,10'-oxybisphenoxyarsine (hereinafter designated as OBPA), 2,3,5,6-tetrachloro-4-(methylsulfone)pyridine, zinc bis(2-pyridylthio-1-oxide) (hereinafter designated as ZPT), N,N-dimethyl-N'-(fluorodichloromethylthio)-N'-phenylsulfamide (dichlorofluanid), poly(hexamethylenebiguanide) hydrochloride, dithio-2-2'-bis(benzomethylamide), 2-methyl-4,5-trimethylene-4-isothiazoline-3-one, 2-bromo-2-nitro-1,3-propanediol, hexahydro-1,3-tris(2-hydroxyethyl)-s-triazine, p-chloro-m-xylenol, 1,2-benzoisothiazoline-3-one and the like, but they are not limited to these compounds. The organic antimicrobial agent to be used is chosen appropriately from the above-recited ones in consideration of hydrophilicity, water resistance, sublimation capability, safety and so on. Of the organic antimicrobial agents, 2-bromo-2-nitro-1,3-propanediol, TBZ, BCM, OBPA and ZPT are preferred over the others in terms of hydrophilicity, antimicrobial effects and cost.

As to the inorganic antimicrobial agents, mercury, silver, copper, zinc, iron, lead, bismuth and the like are recited in order of decreasing sterilization effect. Specifically, metals, such as silver, copper, zinc and nickel, or their ions that are carried by silicate carriers, phosphate carriers, oxides, glass, potassium titanate, amino acids or the like are recited. More specifically, zeolite-based antimicrobial agents, potassium silicate-based antimicrobial agents, zirconium phosphate-based antimicrobial agents, calcium phosphate-based antimicrobial agents, zinc oxide-based antimicrobial agents, soluble glass-based antimicrobial agents, silica gel-based antimicrobial agents, activated carbon-based antimicrobial agents, titanium oxide-based antimicrobial agents, titania-based antimicrobial agents, organometallic compound-based antimicrobial agents, ion exchanger ceramic-based antimicrobial agents, layer phosphate-quaternary ammonium salt-based antimicrobial agents, antimicrobial stainless and the like are cited as examples, but antimicrobial agents usable in the invention are not limited to these examples.

As to a natural antimicrobial agent, there exists the basic polysaccharide of chitosan that is produced by hydrolysis of chitin contained in the Crustacea such as crabs and lobsters, and the like.
For the invention, it is advantageous to use Holon Killer beads cellers (trade names, products of Nikko), which each include an aminometal whose amino acid complexes metal on both sides.
These products have no transpiration property, and easily interact with polymers and the cross-linking component in a hydrophilic layer. So they can undergo molecular dispersion or solid dispersion with stability, are apt to be exposed effectively at the hydrophilic layer surface, and moreover cause no elution when they are soused with water. Therefore, they can retain their effect for a long time, and exert no influence on humans, too. In addition, they can be dispersed stably into a hydrophilic layer and a coating solution, and also cause no deterioration of the hydrophilic layer and the coating solution.
Of the antimicrobial agents recited above, silver-based inorganic antimicrobial agents and water-soluble organic antimicrobial agents are particularly preferred over the others because of their great antimicrobial effects. More specifically, the preferred in particular are silver zeolite wherein zeolite as a silicate-based carrier is made to carry silver, the antimicrobial agent wherein silica gel is made to carry silver, 2-bromo-2-nitro-1,3-propanediol, TPN, TBZ, BCM, OBPA and ZPT. Examples of commercial silver zeolite-based antimicrobial agents preferred in particular include ZEOMIC produced by SHINANEN CO., LTD., SILWEL produced by FUJI SILYSIA CHEMICAL LTD., BACTENON produced by JAPAN ELECTRONIC MATERIALS CORPORATION, and so on. In addition, silver-carrying inorganic ion exchanger ceramics NOVARON produced by TOAGOSEI CO., LTD. and ATOMY BALL produced by JGC Catalysts and Chemicals Ltd., and the triazine-based antimicrobial agent SAN-AI BAC P produced by SAN-AI OIL CO., LTD. are also preferred.

The antimicrobial agent content is generally from 0.001 to 10 mass%, preferably from 0.005 to 5 mass%, far preferably from 0.01 to 3 mass%, particularly preferably from 0.02 to 1.5 mass%. And the best content is from 0.05 to 1 mass%. As long as the content is 0.001 mass% or above, antimicrobial action can be brought about effectively. On the other hand, the content of 10 mass% or below causes neither hydrophilicity reduction nor degradation in aging characteristics, and exerts no adverse influence upon soil-resistant and antifogging properties.

### [Inorganic Fine Particles]

For the purposes of improving hydrophilicity, preventing coatings from cracking and enhancing film strength, the hydrophilic layer according to the invention may contain inorganic fine particles. Suitable examples of such inorganic fine particles include silica, alumina, magnesium oxide, titanium oxide, magnesium carbonate, calcium alginate and mixtures of two or more of these substances.

The average size of inorganic fine particles is preferably from 5 nm to 10 µm, far preferably from 0.5 to 3 µm. As long as the average size is within the range specified above, the inorganic fine particles can be dispersed into the hydrophilic layer with stability, and allow film strength of the hydrophilic layer to be maintained. So, covers with high durability and excellent hydrophilicity can be formed.

Of the inorganic fine particles as recited above, colloidal silica dispersion in particular is preferred over the others, and commercial products thereof are easily available.

The content of inorganic fine particles is preferably 80 mass% or below, far preferably 50 mass% or below, with respect to the total solids content in the hydrophilic layer.

### [Other Ingredients]

Various additives that can be used as required in a coating solution for forming the hydrophilic layer of the present cover are described below.

### 1) Surfactant

A surfactant may be added to a coating solution for forming the hydrophilic layer of the present cover.

Examples of such a surfactant include those disclosed in each of the gazettes JP-A-62-173463 and JP-A-62-183457. To be more specific, therein are included anionic surfactants such as salts of dialkylsulfosuccinic acids, salts of alkylnaphthalenesulfonic acids and salts of fatty acids, nonionic surfactants such as polyoxyethylene alkyl ethers, polyoxyethylene alkyl aryl ethers, acetylene glycols and polyoxyethylene-polyoxypropylene block copolymers, and cationic surfactants such as alkylamine salts and quaternary ammonium salts. Instead of these surfactants, organic fluorine compounds may be used. It is preferable that the organic fluorine compounds are hydrophobic. Examples of such organic fluorine compounds include fluorochemical surfactants, oily fluorine compounds (e.g. fluorocarbon polymer oil) and solid fluorocarbon resins (e.g. tetrafluoroethylene resin), and more specifically, they include those disclosed in each of the gazettes JP-B-57-9053 (columns 8 to 17) and JP-A-62-135826.

By using combinations of such surfactants and the hydrophilic polymers according to the invention, the surface having higher hydrophilicity can be formed. Although the mechanism of an increase in surface hydrophilicity is not fully elucidated yet, we surmise that, with the migration of a surfactant of a low-molecular-weight compound to the coating's surface layer in the process of drying the coating, the hydrophilic segments in polymer segments are drawn to the hydrophilic site of the surfactant and conduce to higher hydrophilicity. The amount of a surfactant added, though chosen as appropriate to the intended purpose, is preferably from 0.001 to 10 mass%, far preferably from 0.01 to 5 mass%, with respect to the total solids content in the hydrophilic composition.

### 2) Ultraviolet Absorber

From the viewpoint of enhancing weather resistance and durability, an ultraviolet absorber can be used in the present cover.
Examples of such an ultraviolet absorber include the triazole compounds disclosed in JP-A-58-185677, JP-A-61-190537, JP-A-2-782, JP-A-5-197075, JP-A-9-34057 and so on, the benzophenone compounds disclosed in JP-A-46-2784, JP-A-5-194483, U.S. Patent No. 3214463 and so on, the cinnamic acid compounds disclosed in JP-B-48-30492, JP-B-56-21141, JP-A-10-88106 and so on, the triazine compounds disclosed in JP-A-4-298503, JP-A-8-53427, JP-A-8-239368, JP-A-10-182621, JP-T-8-501291 (the term "JP-T" as used herein means a published Japanese translation of a PCT patent application) and so on, the compounds disclosed in Research Disclosure, No. 24239, compounds that absorb ultraviolet light and emit fluorescence, typified by stilbene compounds and benzoxazole compounds, or the so-called fluorescent whitening agents, and so on.

The amount of an ultraviolet absorber added, though chosen as appropriate to the intended purpose, is generally from 0.5 to 15 mass% on a solid-content basis.

### 3) Antioxidant

For the purpose of improving stability of the present cover, an antioxidant can be added to a coating solution for forming the hydrophilic layer. Examples of such an antioxidant include those disclosed in EP-A-223739, EP-A-309401, EP-A-309402, EP-A-310551, EP-A-310552, EP-A-459416, DE-A1-3435443, JP-A-54-262047, JP-A-63-113536, JP-A-63-163351, JP-A-2-262654, JP-A-2-71262, JP-A-3-121449, JP-A-5-61166, JP-A-5-119449, US-A1-4814262, US-A1-4980275, and so on.
The amount of an antioxidant added, though chosen as appropriate to the intended purpose, is preferably from 0.1 to 8 mass% on a solid-content basis.

### 4) Solvent

For the purpose of ensuring formability of a uniform coating on a substrate at the time of formation of a hydrophilic layer of the present cover, it is also effective to add an organic solvent in moderation to a coating solution for forming the hydrophilic layer.
Examples of such a solvent include ketone solvents such as acetone, methyl ethyl ketone and diethyl ketone, alcohol solvents such as methanol, ethanol, 2-propanol, 1-propanol, 1-butanol and tert-butanol, chlorine-containing solvents such as chloroform and methylene chloride, aromatic solvents such as benzene and toluene, ester solvents such as ethyl acetate, butyl acetate and isopropyl acetate, ether solvents such as diethyl ether, tetrahydrofuran and dioxane, glycol ether solvents such as ethylene glycol monomethyl ether and ethylene glycol dimethyl ether, and so on.
In this case, it is effective for an organic solvent to be added to such an extent that no problem arises in connection with OC (a volatile organic solvent), and the addition amount is preferably in a range of 0 to 50 mass%, far preferably in a range of 0 to 30 mass%, with respect to the whole of coating solutions used at the time of cover formation.

### 5) High-Molecular Compound

In order to adjust film properties of the hydrophilic layer, various kinds of high-molecular compounds can be added to a coating solution for forming the hydrophilic layer of the present cover in such an amount range as not to impair the hydrophilicity. Examples of high-molecular compounds which can be used include acrylic polymers, polyvinyl alcohol resin, polyvinyl butyral resin, polyurethane resin, polyamide resin, polyester resin, epoxy resin, phenol resin, polycarbonate resin, polyvinyl formal resin, Shellac, vinyl resins, acrylic resins, and gum resin, wax and other natural resins. These high-molecular compounds may be used in combination of two or more thereof. Among them, vinyl copolymers prepared by copolymerization with acrylic monomers are preferred over the others. Further, copolymers containing as their structural units carboxyl group-containing monomers, alkyl methacrylates or alkyl acrylates can be preferably used in a copolymeric composition for high-molecular binder.

In addition to those additives, it is possible to incorporate other additives as required, wherein are included e.g. a leveling additive, a matting agent, wax for adjusting film properties, and a tackifier or the like in such an amount range as to improve adhesion to a substrate without no impairment of hydrophilicity.
Examples of such a tackifier include the high-molecular-weight adhesive polymers disclosed in JP-A-2001-49200, pp. 5-6 (such as copolymers prepared from (meth)acrylic acid esters of alcohol whose alkyl moiety contains 1 to 20 carbon atoms, (meth)acrylic acid esters of alicyclic alcohol having 3 to 14 carbon atoms, or (meth)acrylic acid esters of aromatic alcohol having 6 to 14 carbon atoms), low-molecular-weight tackiness-imparting resins having polymerizable unsaturated bonds, and the like.

In the present antifogging cover, the thickness of a coating (a hydrophilic coating) is preferably from 0.1 µm to 2 µm. When the coating thickness is 0.1 µm or above, sufficient hydrophilic effects can be achieved. On the other hand, when the coating thickness is 2 µm or below, there occurs no defect such as unevenness in drying. Since projections on the member surface cannot be buried adequately when the coating thickness is thin, a somewhat-thick coating is generally required. However, the invention can achieve high hydrophilicity with a coating thickness thinner than ever because the coating solution can have a high ability to wet other members and an excellent leveling property.

The present antifogging cover can be obtained by coating on a substrate a coating solution for formation of a hydrophilic layer, and then heating and drying the solution coated, thereby forming a layer with surface hydrophilicity. The heating temperature and the heating time for forming the hydrophilic layer have no particular limits so long as they can ensure removal of the sol solvent and formation of a strong coating, but in point of production suitability and the like, it is appropariate that the heating temperature be 150°C or below and the heating time be within one hour.
The present cover can be made using publicly known coating methods and has no particular restrictions. And examples of a coating method applicable in the invention include a spray coating method, a dip coating method, a flow coating method, a spin coating method, a roll coating method, a film applicator method, a screen printing method, a bar coater method, and coating methods using a brush, a sponge and the like.

The drying temperature of a coating solution is preferably from 10°C to 150°C, far preferably from 25°C to 100°C. When the drying temperature is low, cross-linking reaction cannot progress to a sufficient extent and the coating strength becomes low. When the drying temperature is high, the coating formed is apt to produce cracks and becomes partly insufficient in anti-fog property. The drying time is preferably from 5 minutes to 1 hour. And it is far preferably from 10 minutes to 30 minutes. When the drying time is short, reduction in coating strength may occur because of insufficient drying. When the drying time is made longer than necessary, substrate degradation may occur.

In the invention, the center-line average roughness Ra of the hydrophilic layer surface is from 1.0 nm to 5.0 nm, preferably from 1 nm to 3 nm.
In addition, the Tg of the hydrophilic coating is preferably from 40°C to 150°C in terms of coating strength. And the elasticity modulus of the hydrophilic coating is preferably from 1 GPa to 7 GPa.
The symbol Ra represents a center-line average roughness that can be analyzed by an optical interference method or the like.
Examples of a method for controlling surface properties of the hydrophilic layer include a method of controlling the particle size and content of inorganic fine particles used, a method of adjusting the surface roughness of a substrate in itself (which can be controlled by the temperature and time in molding a substrate in itself and the surface roughness of a mold used), a method of controlling the viscosity of a coating liquid composition for forming the hydrophilic layer and the temperature and speed at which the hydrophilic coating is heated, and so on, but the methods usable in the invention should not be construed as being limited to these examples. In other cases where an AR coating layer or a hard coating layer is formed on the substrate surface, the surface properties can be controlled by size of inorganic fine particles (e.g. SiO₂) contained in the layer. Needless to say, the layer surface becomes smooth by reducing the particle size.
Alternatively, the surface properties can be controlled by temperature and time to dry the coating applied. The layer surface can also be made smooth by enhancing the leveling property of a coating solution used.

In the invention, for the purpose of improving adherence of the hydrophilic layer to a substrate, an intermediate layer may further be provided between a substrate and the hydrophilic layer as required. The intermediate layer has no particular restriction. Other hydrophilic layers different in composition may be provided, or publicly known anti-corrosive preventive layers, typified by chromate series, may be given.

In the invention, the hydrophilic layer has a water contact angle of 15° or below, preferably 10° or below, not only before but also after it is subjected to 500-hour immersion in 30°C water. Therefore, it can be said that the present antifogging cover has ample hydrophilicity and retains its effect for a sufficiently long period of time.

The degree of hydrophilicity of the hydrophilic layer surface can also be evaluated by surface free-energy measurement. For instance, the surface free energy can be measured by using the Zisman plot method. To be more specific, this measuring method utilizes a property that the surface tension of an aqueous solution of inorganic electrolyte such as magnesium chloride increases with an increase in strength of the solution. Therein, the contact angle is measured by using such an aqueous solution under the condition of midair and room temperature, and the data on aqueous solutions various in strength are plotted, with surface tension of each aqueous solution as abscissa and value of cosθ, to which each contact angle is reduced, as ordinate, thereby obtaining a linear relation. And the surface tension in the case of cosθ=1, namely contact angle=0°, is defined as the surface free energy of a solid. The surface tension of water is 72 mN/m, and it can be said that the greater the value of surface free energy, the higher the hydrophilicity.
The hydrophilic layer having its surface free energy in a range of 70 mN/m to 95 mN/m, preferably 72 mN/m to 93 mN/m, far preferably 75 mN/m to 90 mN/m, as measured by such a method is superior in hydrophilicity and delivers satisfactory performance.

### [Substrate]

The substrate used in the invention, though not particularly limited, is preferably glass in terms of transparency. In addition, transparent resins which are lightweight and easy to machine as compared with glass are also suitable for use. Of transparent resins, resins having especially high transparency such as a ray transmittance of 80% or above are preferable to others. Specifically, polymethyl methacrylate (PMMA) and polycarbonate (PC) resin in particular are used to advantage. These resins may take the form of copolymer. Further, they may be dyed with various kinds of pigments or dyes as required.
It is appropriate for the substrate to have a refractive index of 1.4 to 1.9. When the substrate's refractive index falls outside this range, the refractive index difference between the substrate and the present hydrophilic layer tends to become great, and cases may occur wherein the substrate cannot perform adequately. The difference in refractive index between the substrate and the hydrophilic layer is preferably from 0.5% to 30.0%, far preferably from 0.5% to 10%, referred to the refractive index of the hydrophilic layer. The refractive index measurement can be made with a refractometer (FE3000, made by OTSUKA ELECTRONICS CO., LTD.)

### Examples

The invention will now be illustrated in more detail by reference to the following examples, but these examples should not be construed as limiting the scope of the invention. Additionally, all parts in the examples stand for parts by mass.

### [EXAMPLE 1]

To a hydrophilic polymer and a metal alkoxide compound, whose respective kinds and amounts are shown in Table 1, 400 parts of distilled water, 70 parts of ethanol and 10 parts of a 5 mass% aqueous solution of anionic surfactant having the structure illustrated hereinafter were added and stirred for 30 minutes at 25°C, thereby preparing a hydrophilic composition.
Then, the concave area of a meter cover made of glass (plate thickness: 2 mm, radius of curvature: 400 mm) was coated with the hydrophilic composition so as to have a 1 µm-thick coating after drying, and then was subjected to 10-minute heat drying at 100°C. The glass obtained, which was rendered hydrophilic by the foregoing treatment, was evaluated by the following methods.

### Evaluation Methods

### · Center-Line Average Roughness Ra

A 100 µm square of area was measured for center-line average roughness according to optical interferometry on the condition that the cutoff was 0.25 mm by the use of a digital optical prophimeter (made by WYKO).

### · Refractive Index

A substrate and a hydrophilic layer were each measured for refractive index by the use of a refractometer (FE3000 made by OTSUKA ELECTRONICS CO., LTD.).
· Immersion in Water
   The glass rendered hydrophilic by the foregoing treatment was immersed in city water controlled to a temperature of 30°C for a time period of 500 hours, and then dried for 5 minutes at a temperature of 90°C.
· Water Contact Angle
   An angle that an ultrapure waterdrop made with a hydrophilic layer surface, or a waterdrop contact angle, was measured with a contact angle meter DropMaster 500, made by KYOWA INTERFACE SCEIENCE CO., LTD. The contact angle was evaluated before and after the immersion in water.
· Durability under Humid, Hot Environmental Condition
   After the surface rendered hydrophilic by the foregoing treatment was subjected to 5 times repeated cycles of 5-minute lying in the 60°C-90% RH environment and subsequent 5-minute drying at 90°C, the contact angle of the hydrophilic surface was measured in the foregoing manner, and the anti-fog property was determined by the following method.

### (Evaluation of Anti-Fog Property)

The surface rendered hydrophilic by the foregoing treatment was exposed to water vapor of 40°C for 1 minute (wherein the distance from a jet tip of water vapor to every sample was 20 cm), and how was the sample surface fogged was visually checked after isolation from the water vapor and evaluated by the following criteria. For the evaluation, ten samples were prepared.
Excellent: No fogging is observed on all of ten samples.
Good: Fogging is observed on some or all parts of one or two samples.
Bad: Fogging is observed on some or all parts of three or more samples.

### Results obtained are shown in Table 1.

### [EXAMPLES 2 TO 11 AND COMPARATIVE EXAMPLES 1 TO 8]

Each of Examples 2 to 11 and Comparative Examples 1 to 8 was carried out in the same manner as Example 1, except that the ingredients listed in Table 1, namely the substrate (which had the same thickness and radius of curvature as in Example 1), the hydrophilic polymer, the metal alkoxide and the others, were used in place of the corresponding ones in Example 1, respectively.

Synthesis methods of Compound A and Compound B, which are hydrophilic polymers, are described below. In the manner similar thereto, the other hydrophilic polymers can also be synthesized.

### Compound A

In a three necked flask, 100 parts of acrylamide, 10 parts of 3-mercaptopropyltrimethoxysilane and 200 parts of dimethylacetamide were placed, and mixed under heating at 80°C in a stream of nitrogen. Thereto was added 0.1 parts of 2,2'-azobis(2,4-dimethylvaleronitrile), and the resulting mixture was subjected to reaction for 5 hours. The reaction solution obtained was dripped into 3,000 L of methanol, and caused precipitation of solid matter. The solid matter was filtered off, and dried for 12 hours at 60°C. Thus, Compound A was obtained. The molecular weight of Compound A was measured by GPC and calculated in terms of standard polystyrene.

### Compound B

In a three necked flask, 100 parts of acrylamide, 20 parts of acrylamide-propyltriethoxysilane and 500 parts of dimethylformamide were placed, and mixed under heating at 80°C in a stream of nitrogen. Thereto was added 0.1 parts of 2,2'-azobis(2,4-dimethylvaleronitrile), and the resulting mixture was subjected to reaction for 5 hours. The reaction solution obtained was dripped into 3,000 L of n-hexane, and caused precipitation of solid matter. The solid matter was filtered off, and dried for 12 hours at 60°C. Thus, Compound B was obtained. The molecular weight of Compound B was measured by GPC and calculated in terms of standard polystyrene.

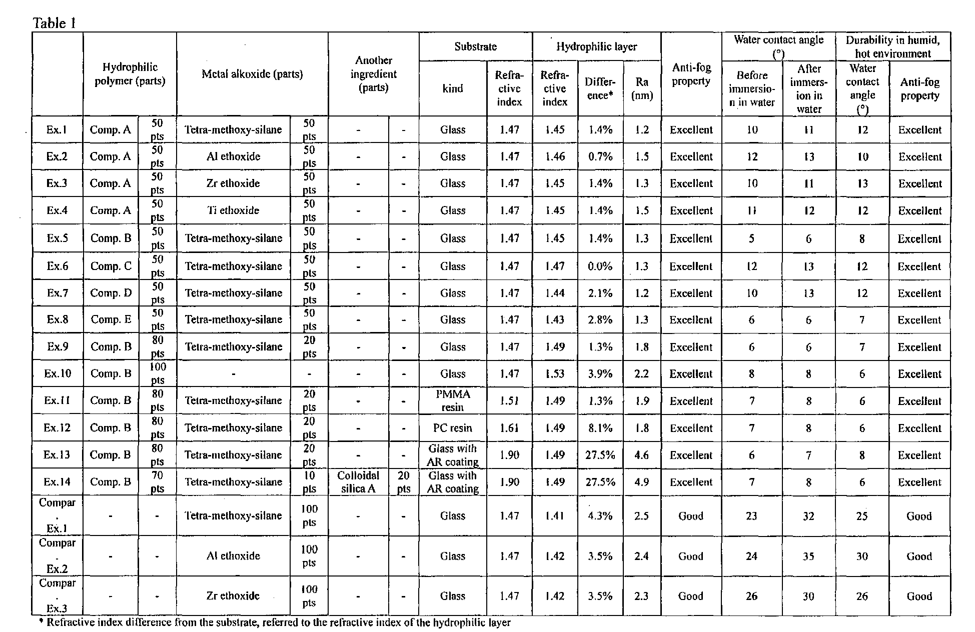

As the metal alkoxides in Table 1, commercially available agents were used. The colloidal silica A has an average particle size of 20 nm, and the colloidal silica B has an average particle size of 150 nm (both of which are products of NISSAN CHEMICAL INDUSTRIES LTD.). And glass with AR coating is glass with a SiO₂ coating layer.

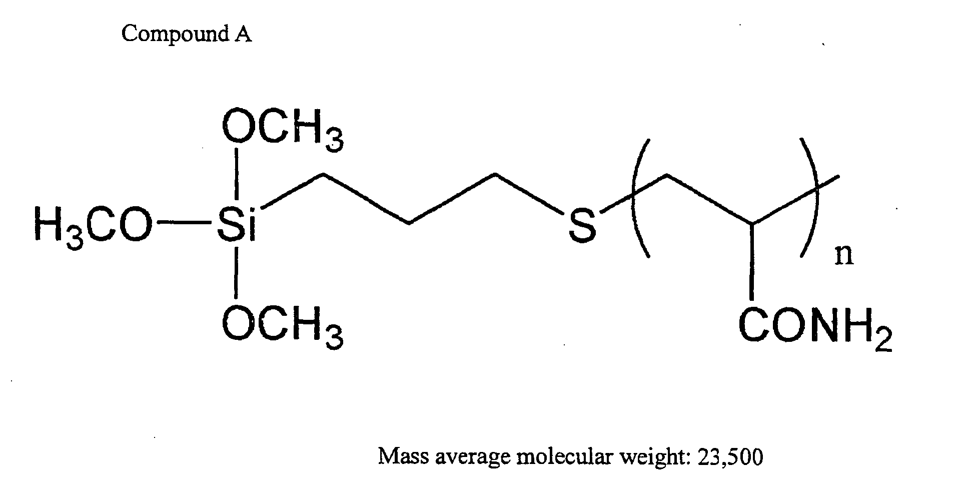

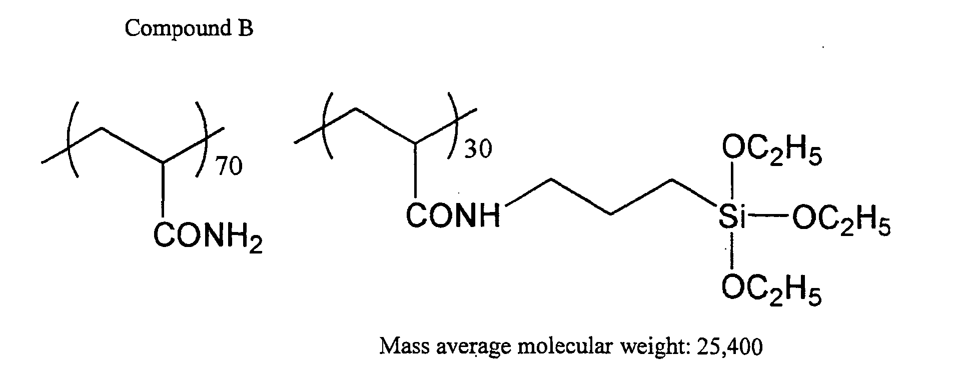

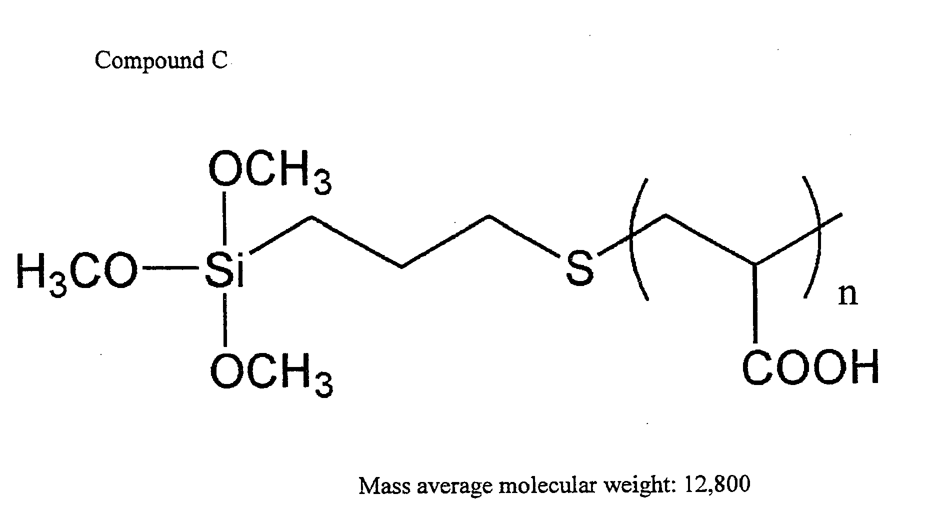

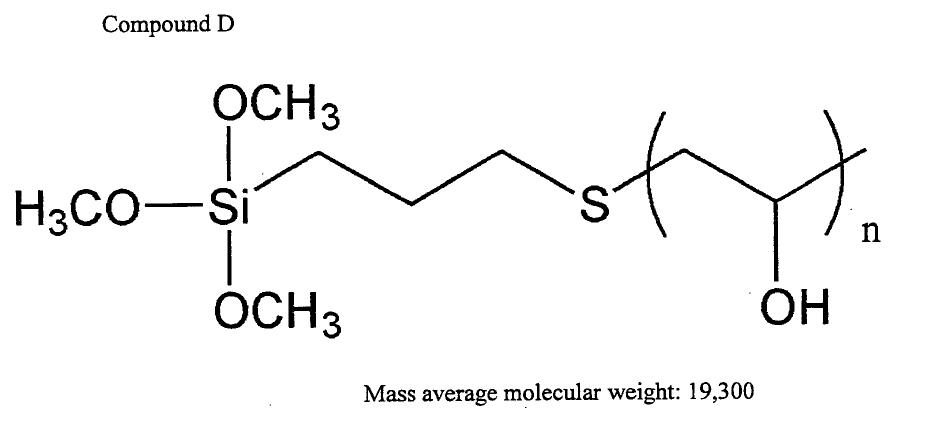

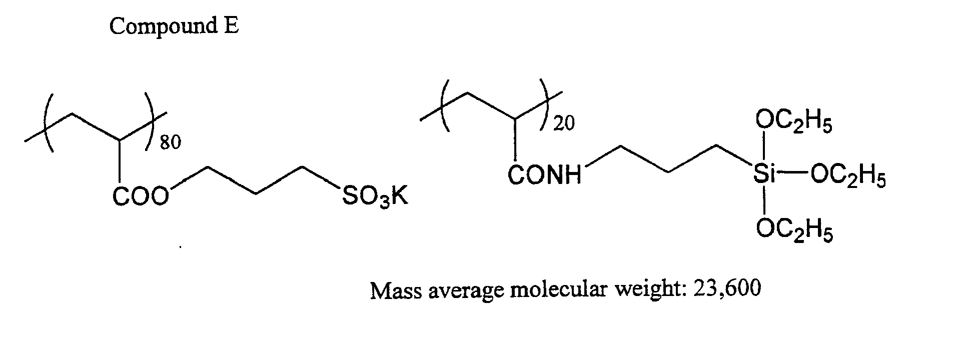

All the foregoing mass average molecular weights are values measured by GPC (which are calculated in terms of standard polystyrene).

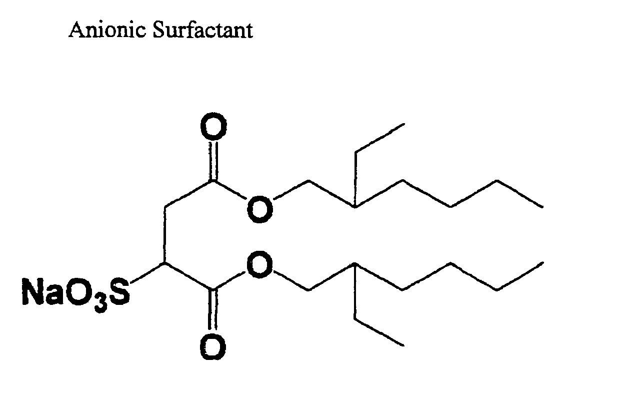

### Industrial Applicability

The present antifogging cover has various uses including a use as a meter cover and so on, and no fogging happens to the present cover because, even when water vapors condense to water droplets by changes in temperature and humidity conditions and adhere to the cover surface, the water droplets instantaneously wet the cover surface and spread out. So, the present antifogging cover can deliver excellent visibility. In addition, the present antifogging cover has excellent durability too since it has a water contact angle of 15° or below on its surface even after long-term immersion in water and can maintain its high hydrophilicity for a long time.
While the invention has been described in detail and by reference to the particular embodiments thereof, it will be apparent to one skilled in the art that various changes and modifications can be made therein without departing from the spirit and scope of the invention.
The present application is based on the Japanese Patent Application filed in September 20, 2007 (Japanese Patent Application No. 2007-244113), and the entire disclosure of this patent application is incorporated herein by reference, as if fully set forth herein.

## Claims

1. An antifogging cover having a coating layer of hydrophilic composition on at least one side of a substrate,
wherein a surface of the coating layer has a water contact angle of 15° or below not only before but also after the coating layer is subjected to 500-hour immersion in 30°C water, and a center-line average roughness Ra of from 1.0 nm to 5.0 nm.

2. The antifogging cover as described in claim 1,
wherein the water contact angle is 10° or below not only before but also after the coating layer is subjected to 500-hour immersion in 30°C water.

3. The antifogging cover as described in claim 1 or 2,
wherein the substrate is formed from any of glass, acrylic resin and polycarbonate resin.

4. The antifogging cover as described in any of claims 1 to 3,
wherein a refractive index difference between the coating layer and the substrate is from 0.5% to 30.0% of a refractive index of the coating layer.

5. The antifogging cover as described in any of claims 1 to 4,
wherein the hydrophilic composition contains a polymer having an alkoxysilyl group in its molecule.

6. The antifogging cover as described in claim 5,
wherein the polymer having an alkoxysilyl group in its molecule has a structure represented by following formula (II): 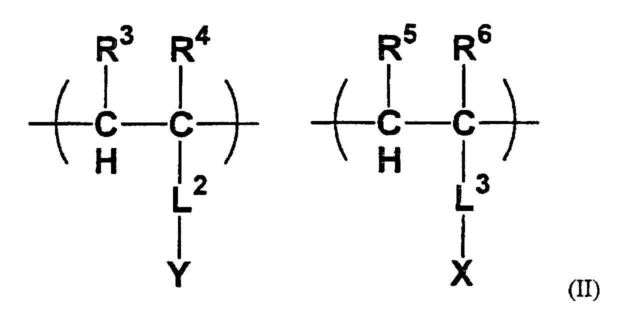 wherein each of R³, R⁴, R⁵ and R⁶ independently represents a hydrogen atom or a hydrocarbon group; X represents a group represented by following formula (a); each of L² and L³ independently represents a single bond or a linkage group; and Y represents NHCOR, -NHCO₂F, -NHCONR₂, -CONH₂, -NR₂, -CONR₂, -OCONR₂, -COR, -OH, -OR, -CO₂M, -CO₂R, -SO₃M, -OSO₃M, -SO₂R, -NHSO₂R, -SO₂NR₂, -PO₃M, -OPO₃M, -(CH₂CH₂O)ₙH, -(CH₂CH₂O)ₙCH₃ or -NR₃Z¹, where R represents a hydrogen atom, an alkyl group, an aryl group or an aralkyl group, and when plural Rs are present, each R may be the same as or different from every other R, M represents a hydrogen atom, an alkyl group, an alkali metal, an alkaline earth metal or an onium, n represents an integer, and Z¹ represents a halogen ion;
Formula (a): -Si(R¹⁰²)ₐ(OR¹⁰¹)₃₋ₐ
wherein R¹⁰¹ represents a hydrogen atom or an alkyl group; R¹⁰² represents a hydrogen atom or a univalent hydrocarbon group selected from alkyl groups, aryl groups or aralkyl groups; and a represents an integer of 0 to 2, and when plural R¹⁰¹s or plural R¹⁰²s are present, each R¹⁰¹ or R¹⁰² may be the same as or different from every other R¹⁰¹ or R¹⁰², respectively.

7. The antifogging cover as described in any of claims 1 to 6,
wherein the hydrophilic composition contains an alkoxide compound of any element selected from Si, Ti, Zr and Al.

8. The antifogging cover as described in any of claims 1 to 7,
wherein the surface of the coating layer has a water contact angle of 5° to 15° not only before but also after the coating layer is subjected to 500-hour immersion in 30°C water.

9. A meter cover, in which the antifogging cover as described in any of claims 1 to 8 is used for covering a meter.
